# EUROPÄISCHE PATENTSCHRIFT

(11) **EP 0 381 625 B1**
(45) Veröffentlichungstag und Bekanntmachung des Hinweises auf die Patenterteilung: **31.07.1996**
(21) Anmeldenummer: 90810059.7
(22) Anmeldetag: 24.01.1990
(51) Int. Cl.: C08L 63/00, C08L 9/02, C08L 67/00

(54) **Zähe Epoxidharze**
Toughened epoxy resins
Résines époxydes tenaces

(30) Priorität: 02.02.1989 CH 368/89
(43) Veröffentlichungstag der Anmeldung: 08.08.1990
(73) Patentinhaber: CIBA-GEIGY AG, 4002 Basel (CH)
(72) Erfinder: Mülhaupt, Rolf, Prof.Dr., D-7800 Freiburg i.Br. (DE); Rüfenacht, Werner, CH-1723 Marly (CH)

(56) Entgegenhaltungen:
- EP-A- 0 140 377
- EP-A- 0 215 740
- EP-A- 0 251 792
- EP-A- 0 275 186
- EP-A- 0 284 564
- EP-A- 0 353 190
- US-A- 3 723 568
- US-A- 4 032 593

## Beschreibung

Die vorliegende Erfindung betrifft neue Epoxidharzzusammensetzungen und die daraus erhältlichen gehärteten Produkte.

Aus der GB-A-1,O17,612 sind Epoxidierungsprodukte von mit Hydroxyarylcarbonsäuren verkappten Polyalkylenglykolen bekannt. Gehärtete Produkte aus diesen Epoxidharzen zeichnen sich durch gute Schlagzähigkeit und hohe Glasübergangstemperaturen aus.

Ferner sind aus der US-A-3,723,568 thermoplastische Blockcopolyester bekannt, die zum Modifizieren von Epoxidharzen verwendet werden können.

Solche Zusätze bewirken im allgemeinen eine Erhöhung der Schlagzähigkeit und der Flexibilität des gehärteten Produktes. Die Schälfestigkeit lässt im allgemeinen aber zu wünschen übrig.

EP-A-284 564 offenbart heißhärtbare Klebmittel, die Epoxydharze, Härter und NBR enthalten.

Zähigkeit bereitgestellt, die zu gehärteten Produkten mit hoher Festigkeit und hohen Glasübergangstemperaturen verarbeitet werden können und die sich besonders als strukturelle Schmelzkleber eignen.

Die Erfindung betrifft härtbare Zusammensetzungen enthaltend
A) 40-95 Gew.% eines Epoxidharzes mit durchschnittlich mehr als einer Epoxidgruppe pro Molekül,
B) einen bei erhöhter Temperatur aktivierbaren Härter für Komponente A),
C) ein bei Temperaturen unterhalb 80°C fließfähiges Copolymers auf Basis von Butadien, Acrylnitril und gegebenenfalls weiteren ethylenisch ungesättigten Comonomeren, und
D) ein segmentiertes Copolymeres enthaltend Weich- und Hartsegmente der Formeln Ia und Ib oder der Formeln IIa und IIb oder der Formeln IIIa und IIIb oder eine Kombination von Weich- und Hartsegmenten der Formel IV 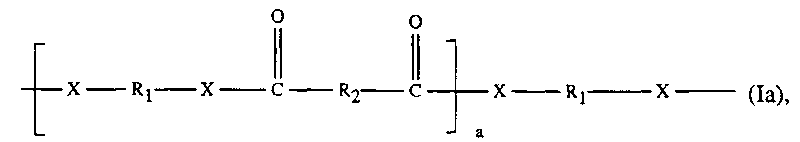 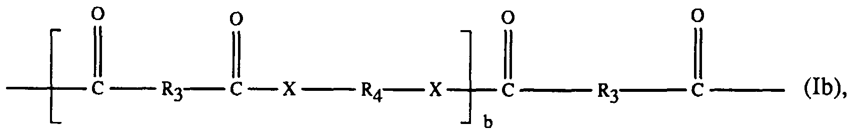 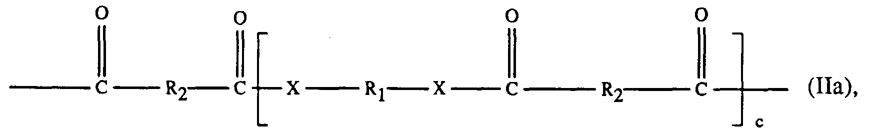 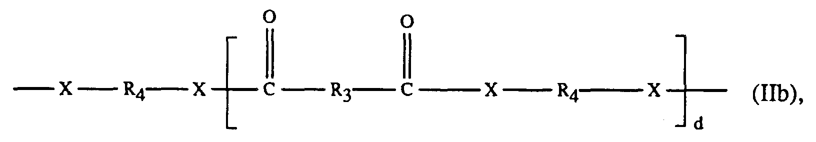 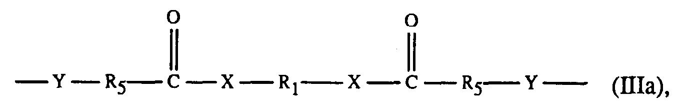 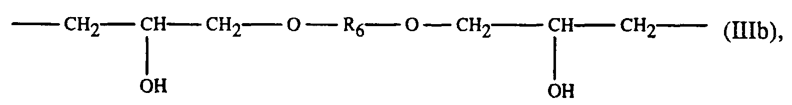 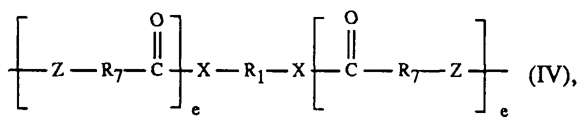
worin die Hartsegmente der Formeln Ib, IIb, IIIb und die Hartsegmente -[CO-R₇-Z]- in Formel IV eine Erweichungstemperatur oberhalb von 25°C besitzen, R₁ der zweiwertige Rest eines Polyalkylenglykols mit einem durchschnittlichen Molekulargewicht (Zahlenmittel) zwischen 500 und 5000 bestehend im wesentlichen aus Polypropylenglykol- oder Polybutylenglykoleinheiten nach dem Entfernen der Hydroxyl- oder Aminoendgruppen bedeutet, R₂ und R₃ unabhängig voneinander der zweiwertige Rest einer Dicarbonsäure nach dem Entfernen der Carboxylgruppen sind, R₄ ein zweiwertiger Rest eines Diols, Diamins oder Aminoalkohols mit einem Molekulargewicht von weniger als 400 nach dem Entfernen der funktionellen Gruppen bedeutet, R₅ ein zweiwertiger Rest einer aromatischen Hydroxycarbonsäure oder Aminocarbonsäure nach dem Entfernen der funktionellen Gruppen ist, R₆ ein zweiwertiger Rest eines aromatischen Diglycidylethers nach dem Entfernen der funktionellen Gruppen bedeutet, R₇ ein Alkylenrest ist oder eine der für R₅ definierten Bedeutungen annimmt, X und Z unabhängig voneinander -O- oder -NH-bedeuten, Y -O- oder -NR₈- ist, R₈ Alkyl bedeutet, die Indizes a und c unabhängig voneinander eine ganze Zahl von 0 bis etwa 100, bevorzugt 0 bis 10, ganz besonders bevorzugt 0 oder 1 bedeuten, die Indizes b und d unabhängig voneinander eine ganze Zahl von 1 bis etwa 100, bevorzugt 1 bis 50, ganz besonders bevorzugt 1 bis 10, bedeuten und der Index e eine ganze Zahl von 1 bis etwa 50, bevorzugt 5 bis 10, ist, wobei die Komponente A) im Falle, dass D) ein segmentiertes Copolymeres enthaltend Weich- und Hartsegmente der Formeln der Formeln IIIa und IIIb ist, ein fester Diglycidylether auf Basis von Bisphenol A oder eine feste Kombination dieser Harze mit flüssigen Diglycidylethern auf Basis von Bisphenol A ist und wobei es ausgeschlossen ist, dass e gleich 1 ist, wenn R₇ ein zweiwertiger Rest einer aromatischen Hydroxycarbonsäure oder Aminocarbonsäure nach dem Entfernen der funktionellen Gruppen ist.

Als Komponente A) der erfindungsgemässen Zusammensetzungen eignen sich praktisch alle Epoxidharze mit durchschnittlich wenigstens zwei 1,2-Epoxidgruppen pro Molekül.

Beispiele dafür sind:
I) Polyglycidyl- und Poly-(β-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit β-Methylepichlorhydrin in Gegenwart von Basen erhalten werden können.
   Beispiele für Verbindungen mit mindestens zwei Carboxylgruppen im Molekül sind gesättigte aliphatische Dicarbonsäuren, wie Oxalsäure, Malonsäure, Bernsteinsäure, α-Methylbernsteinsäure, Glutarsäure, Adipinsäure, Pimelinsäure, Azelainsäure, Sebazinsäure oder dimerisierte Linolsäure; oder ungesättigte aliphatische Dicarbonsäuren, wie Maleinsäure, Mesaconsäure, Citraconsäure, Glutaconsäure oder Itaconsäure; oder cycloaliphatische Dicarbonsäuren, wie Hexahydrophthal-, Hexahydroisophthal- oder Hexahydroterephthalsäure, oder Tetrahydrophthal-, Tetrahydroisophthal- oder Tetrahydroterephthalsäure, oder 4- Methyltetrahydrophthalsäure, 4-Methylhexahydrophthalsäure oder Endomethylentetrahydrophthalsäure; oder aromatische Dicarbonsäuren, wie Phthal-, Isophthal- oder Terephthalsäure; oder Copolymere von (Meth)acrylsäure mit copolymerisierbaren Vinylmonomeren, wie beispielsweise die 1 : 1 Copolymeren von Methacrylsäure mit Styrol oder mit Methacrylsäuremethylester.
   Beispiele für Tri- und höhere Carbonsäuren sind insbesondere aromatische Tri- oder Tetracarbonsäuren, wie Trimellitsäure, Trimesinsäure, Pyromellitsäure oder Benzophenontetracarbonsäure, sowie dimerisierte oder trimerisierte Fettsäuren, wie sie beispielsweise under der Bezeichnung Pripol® im Handel sind.
II) Polyglycidyl- und Poly-(β-methylglycidyl)-ether, die beispiels- weise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit β-Methylepichlorhydrin unter alkalischen Bedingungen oder in Anwesenheit eines sauren Katalysators und anschliessende Akalibehandlung erhalten werden können.
   Beispiele für Verbindungen mit mindestens zwei alkoholischen Hydroxylgruppen und/oder phenolischen Hydroxylgruppen im Molekül sind aliphatische Alkohole, wie Ethylenglykol, Diethylenglykol und höhere Poly-(oxyethylen)-glykole, Propan-1,2-diol, Propan-1,3-diol oder höhere Poly-(oxypropylen)-glykole, Butan-1,4-diol oder höhere Poly-(oxybutylen)-glykole, Pentan-1,5-diol, Neopentylglykol (2,2- Dimethylpropandiol), Hexan-1,6-diol, Octan-1,8-diol, Decan-1,10-diol oder Dodecan-1,12-diol; Hexan-2,4,6-triol, Glycerin, 1,1,1-Trimethylolethan, 1,1,1-Trimethylolpropan, Pentaerythrit, Sorbit oder Polyepichlorhydrine; oder cycloaliphatische Alkohole, wie 1,3- oder 1,4-Dihydroxycyclohexan, 1,4-Cyclohexandimethanol, Bis-(4-hydroxycyclohexyl)-methan, 2,2- Bis-(4-hydroxycyclohexyl)-propan oder 1,1-Bis-(hydroxy-methyl)-cyclohex-3-en; oder Alkohole enthaltend aromatische Gruppen, wie N,N-Bis-(2-hydroxyethyl)-anilin oder p,p′-Bis-(2-hydroxyethylamino)-diphenylmethan; oder ein- oder mehrkernige Polyphenole, wie Resorcin, Hydrochinon, Bis-(4-hydroxyphenyl)-methan, 2,2,-Bis-(4-hydroxyphenyl)-propan, bromiertes 2,2,-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolake, die durch Kondensation von Aldehyden, wie Formaldehyd, Acetaldehyd, Chloral oder Furfuraldehyd mit gegebenenfalls alkyl- oder halogen-substituierten Phenolen, wie Phenol, den oben beschriebenen Bisphenolen, 2-oder 4-Methylphenol, 4-tert.Butylphenol, p-Nonylphenol oder 4-Chlorphenol erhältlich sind.
III) Poly-(N-glycidyl)-verbindungen, die beispielsweise durch Dehydrochlorierung von Reaktionsprodukten von Epichlorhydrin mit Aminen, die mindestens zwei Aminowasserstoffatome enthalten, hergestellt werden können.
   Beispiele für Amine, die solchen Epoxidharzen zugrunde liegen, sind aliphatische Amine, wie Hexamethylendiamin oder n-Butylamin; cycloaliphatische Amine, wie 1,4-Diaminocyclohexan, Bis-aminomethylen-1,4-cyclohexan; aromatische Amine, wie Anilin, p-Toluidin, Bis-(4-aminophenyl)-methan, Bis-(4-aminophenyl)-ether, Bis(4-aminophenyl)-sulfon, 4,4′-Diaminobiphenyl oder 3,3′-Diaminobiphenyl; oder araliphatische Amine, wie m-Xylylendiamin.
   Zu den Poly-(N-glycidyl)-verbindungen zählen aber auch Triglycidylisocyanurat, N,N′-Diglycidylderivate von Cycloalkylenharnstoffen, wie von Ethylenharnstoff oder von 1,3-Propylenharnstoff, und N,N′Diglycidylderiatve von Hydantoinen, wie von 5,5-Dimethylhydantoin.
IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.
V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxycyclopentyloxy)-ethan, 2,3-Epoxycyclopentylglycidylether, Cyclohexan-1,2-dicarbonsäure Diglycidylester, 3,4-Epoxycyclohexylglycidylether, Bis-(2,3-epoxycyclopentyl)-ether, Bis-(3,4-epoxycyclohexyl)-ether, 5(6)-Glycidyl-2-(1,2-epoxyethyl)-bicyclo[2.2.1]heptan, Dicyclopentadiendioxid, Cyclohexa-1,3-diendioxid, 3,4-Epoxy-6-methylcyclohexylmethyl-3′,4′-epoxy-6′-methylcyclohexancarboxylat oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu solchen Verbindungen zählen beispielsweise das N,N,O-Triglycidylderivat des 4-Aminophenols, das N,N,O-Triglycidylderivat des 3-Aminophenols, der Glycidyletherglycidylester der Salicylsäure, N-Glycidyl-N′-(2-glycidyloxipropyl)-5,5-dimethylhydantoin oder 2-Glycidyloxy-1,3-bis-(5,5-dimethyl-1-glycidylhydantoin-3-yl)-propan.

Bevorzugte Komponenten A) sind Glycidylether, insbesondere Diglycidylether auf Bisphenol Basis, wie auf Basis von Bisphenol F oder insbesondere auf Basis von Bisphenol A, und glycidylisierte Novolake, insbesondere glycidylisierte Novolake auf Basis von Phenol-Formaldehyd Novolak oder auf Basis von Kresol-Formaldehyd Novolak.

Ganz besonders bevorzugte Komponenten A) sind feste Diglycidylether auf Basis von Bisphenol A oder feste Kombinationen dieser Harze mit flüssigen Diglycidylethern auf Basis von Bisphenol A.

Als Komponente B) der erfindungsgemässen Zusammensetzungen eignen sich im allgemeinen alle hitzeaktivierbaren Härter für Epoxidharze. Dazu zählen beispielsweise aromatische Amine, wie Bis-(4-aminophenyl)-methan, Anilin-Formaldehyd-Harze, Bis-(4-aminophenyl)-sulfon, Bis-(4-aminophenyl)-methan oder 2,2-Bis-(4-aminophenyl)-propan; Polyaminoamide, wie solche aus aliphatischen Polyaminen und dimerisierten oder trimerisierten Fettsäuren; oder die Amide einschliesslich der substituierten Harnstoffe, insbesondere der Harnstoffe mit aromatischen Resten, wie N-(4-Chlorphenyl-)N′,N′-dimethylharnstoff, N-(2-hydroxyphenyl)-N′,N′-dimethylharnstoff oder 2,4-Bis-(N,N-dimethylureido)-toluol; oder Polyphenole, wie Resorcin, Hydrochinon, 2,2-Bis-(4-hydroxyphenyl)-propan (Bisphenol A) und Novolake auf Basis von Mono- oder Polyphenolen, wie Phenol oder Kresolen, und Aldehyden, wie Formaldehyd, Acetaldehyd oder Chloral; oder Anhydride von Polycarbonsäuren, wie Phthalsäureanhydrid, Tetrahydrophthalsäureanhydrid, Hexahydrophthalsäureanhydrid, Hexachlorendomethylentetrahydrophthalsäureanhydrid, Pyromellitsäureanhydrid oder Benzophenon-3,3′,4,4′-tetracarbonsäuredianhydrid; oder katalytisch wirkende Härtungsmittel, wie beispielsweise tertiäre Amine, z.B. 2,4,6-Tris-(dimethylaminomethyl)-phenol; Imidazole oder Mannichbasen, wie beispielsweise 1-Methylimidazol, 2-Methylimidazol, 2-Phenylimidazol, 1-Benzyl-2-methylimidazol oder 1-Cyanoethyl-2-methylimidazol; Zinnsalze von Alkansäuren, wie beispielsweise Zinnoctoat; Friedel-Crafts-Katalysatoren, wie beispielsweise Bortrifluorid und Bortrichlorid und deren Komplexe und Chelate, die durch Umsetzung von Bortrifluorid mit beispielsweise 1,3-Diketonen, Aminen oder Ethern erhalten werden; oder Amidine, wie beispielsweise Dicyandiamid oder 1-Cyan-3-(niedrigalkyl)-guanidine, wie z.B. die 3-Methyl-, 3,3-Dimethyl- oder 3,3-Diethylderivate.

Bevorzugte Komponenten B) sind Amidine, insbesondere Dicyandiamid.

Als Komponente C) der erfindungsgemässen Zusammensetzungen lassen sich beliebige flüssige Copolymere auf Basis von Butadien und Acrylnitril gegebenenfalls zusammen mit einem weiteren ethylenisch ungesättigen Comonomeren einsetzen. Dabei handelt es sich vorwiegend um statistische Copolymere. Komponente C) ist im allgemeinen ein Elastomerpräpolymer.

Unter einem "flüssigen Copolymeren" ist im Rahmen dieser Beschreibung eine Verbindung zu verstehen, die bei Temperaturen unterhalb von 80°C fliessfähig ist.

Beispiele für gegebenenfalls weitere ethylenisch ungesättigte Comonomere zur Herstellung von Komponente C) sind polare, ethylenisch ungesättigte Comonomere, wie Acrylsäure, Methacrylsäure, Ester der Acryl- oder Methacrylsäure, beispielsweise die Methyl- oder die Ethylester, Amide der Acryl- oder der Methacrylsäure, Fumarsäure, Itaconsäure, Maleinsäure oder deren Ester und Halbester, beispielsweise die Mono- oder Dimethylester, oder Maleinsäure- oder Itaconsäureanhydrid, Vinylester, beispielsweise Vinylacetat, polare Styrole, wie kernchlorierte oder kernbromierte Styrole, oder Methacrylnitril; oder unpolare, ethylenisch ungesättigte Comonomere, wie Ethylen, Propylen, oder insbesondere Styrol oder substituerte Styrole, wie Vinyltoluol.

Der Anteil der Comonomeren in Komponente C) kann in weiten Bereichen schwanken. Diese Komponente wird so gewählt, dass sie mit Komponente D) verträglich ist. Dazu ist es im allgemeinen erforderlich, dass die Differenz der Löslichkeitsparameter der Weichsegmente in Komponente D) und der Löslichkeitsparameter der Butadien-Acrylnitril Anteile der copolymeren Komponente C) kleiner als 0,6 ist. Solche Löslichkeitsparameter lassen sich beispielsweise nach Small's Methode [J.Appl.Chem.,**3**,71(1953)] berechnen. Die Anwendung von Löslichkeitsparametern bei der Ermittlung von Verträglichkeiten von Polymergemischen wurde beispielsweise von C.B. Bucknall in "Toughened Plastics". Kapitel 2, Applied Science Publishers Ltd., London 1977, beschrieben.

Die durchschnittlichen Molekulargewichte (Zahlenmittel) der flüssigen Butadien-Copolymeren betragen im allgemeinen 500-10000, insbesondere 1000-5000. Der Acrylnitrilgehalt der bevorzugten flüssigen Butadien-Copolymeren beträgt im allgemeinen weniger als 50 Gew.%, insbesondere 8 bis 30 Gew.%, bezogen auf den Gesamtmonomergehalt.

Besonders bevorzugte Komponenten C) sind flüssige Butadien-Acrylnitril Copolymere mit gegenüber Epoxidharzen reaktiven funktionellen Gruppen.

Beispiele für solche Copolymeren sind carboxyl- oder hydroxyl- oder aminhaltige Butadien-Acrylnitril Kautschuke, beispielsweise Verbindungen vom Typ HYCAR® der Fa. Goodrich.

Komponenten A) und C) können auch in Form eines Adduktes eines Butadien-Acrylnitril Copolymeren mit gegenüber Epoxidgruppen reaktiven funktionellen Gruppen an ein Epoxidharz eingesetzt werden.Die Herstellung solcher Addukte erfolgt in an sich bekannter Weise durch Erhitzen des reaktiven Butadien-Acrylnitril Kautschuks, beispielsweise eines carboxyl-terminierten Copolymeren, und des Epoxidharzes mit gegebenenfalls einem Katalysator, wie Triphenylphosphin, einem tertiären Amin, einem Ammonium- oder Phosphoniumsalz oder Chrom-Acetylacetonat, so dass ein schmelzbares aber noch in Kombination mit Epoxidharzen härtbares Vorkondensat entsteht.

Komponente D) ist ein ausgewähltes segmentiertes Copolymeres mit Weichsegmenten auf Basis von speziellen Polyalkylenglykolen und mit speziellen Hartsegmenten. Bevorzugte segmentierte Copolymere D) besitzen eine Erweichungstemperatur oberhalb von 25°C.

Die Copolymeren D) sollen mit dem Epoxidharz A) verträglich sein und ein bei erhöhter Temperatur, beispielsweise bei 80 bis 180°C, fliessfähiges Gemisch bilden.

Diese Copolymeren besitzen im allgemeinen ein durchschnittliches Molekulargewicht (Zahlenmittel) von etwa 1'000 bis etwa 100'000, bevorzugt von 1'500 bis 20'000.

Das Weichsegment ist durch die Anwesenheit eines zweiwertigen Polypropylen- oder Polybutylenglykolrests gekennzeichnet. Die Polyalkylenglykolsegmente besitzen in der Regel eine Mindestlänge von etwa fünf wiederkehrenden Struktureinheiten, um dem Copolymeren eine ausreichende Flexibilität zu verleihen. Es können auch Mischungen verschiedener Polypropylen- oder Polybutylenglykolreste innerhalb eines Copolymermoleküls vorliegen; ferner können Copolyethersegmente aus Polypropylenglykol- und Polybutylenglykoleinheiten eingesetzt werden. Bei dieser Ausführungsform können auch bis zu 30 Gew.% an Ethylenglykoleinheiten in den Copolyetherrest einkondensiert sein. Ferner können kleinere Anteile von Heteroatomsegmenten, wie beispielsweise Harnstoffeinheiten, in das Polyalkylenglykolsegment eingebaut sein.

Hydroxyl-terminierte Polyalkylenglykole lassen sich beispielsweise durch anionische Polymerisation, Copolymerisation oder Blockcopolymerisation von Propylenoxid oder Butylenoxid gegebenenfalls in Kombination mit Ethylenoxid mit difunktionellen Alkoholen, wie 1,2-Ethandiol oder 1,4-Butandiol, oder mit mono- oder difunktionellen Aminen, wie Methylamin, Ethylendiamin oder 1,6-Hexamethylendiamin, als Starterkomponenten oder durch kationische Polymerisation oder Copolymerisation von Tetrahydrofuran oder Propylenoxid gegebenenfalls zusammen mit Ethylenoxid mit sauren Katalysatoren, wie BF₃-Etherat, oder durch Polykondensation von unter Wasserabspaltung polykondensierbaren Glykolen, wie 1,3-Propandiol oder 1,4-Butandiol in Gegenwart saurer Veretherungskatalysatoren, wie p-Toluolsulfonsäure, erhalten.

Amino-terminierte Polyalkylenglykole leiten sich beispielsweise von den oben beschriebenen hydroxyl-terminierten Polyalkylenglykolen ab, indem man solche Verbindungen enthaltend primäre Hydroxylgruppen, beispielsweise Polybutylenglykol, mit Acrylnitril umsetzt und die Produkte anschliessend hydriert, oder indem man solche Verbindungen enthaltend sekundäre Hydroxylgruppen mit Ammoniak umsetzt. Geeignete amino-terminierte Polypropylenglykole sind die kommerziell unter der Bezeichnung "Jeffamine®" von der Firma Texaco erhältlichen Verbindungen.

R₁ ist vorzugsweise der zweiwertige Rest eines hydroxyl- oder amino-terminierten Polypropylen- oder Polybutylenglykols nach dem Entfernen der funktionellen Gruppen.

Die durchschnittlichen Molekulargewichte (Zahlenmittel) dieser Polyalkylenglykole liegen zwischen 500 und 5'000, insbesondere zwischen 1'000 und 3'000.

Zu den bevorzugten Resten R₁, die sich von den oben aufgezählten Polyalkylenglykolderivaten ableiten, zählen die Strukturelemente der Formeln Va bis Ve 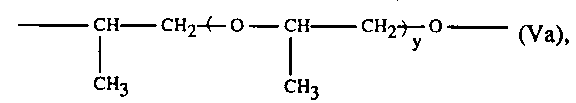 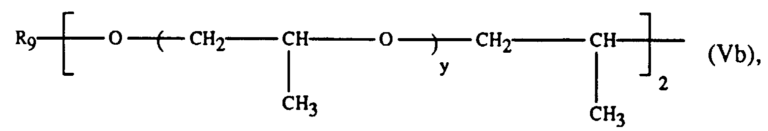 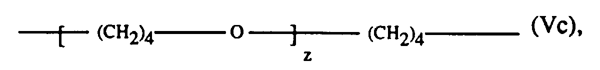 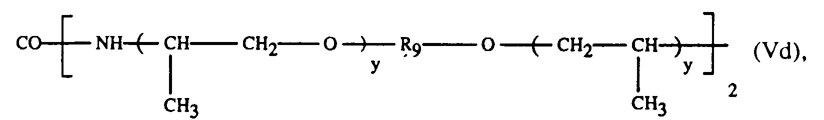 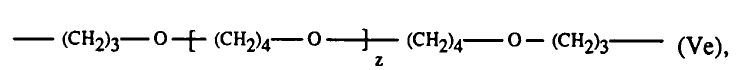 worin y 5 bis 90, insbesondere 10 bis 90, bedeutet, z 10 bis 40 ist, und R₉ ein Rest eines aliphatischen Diols nach dem Entfernen der beiden OH-Gruppen ist.

Bei R₂ und R₃ als zweiwertigen Resten einer Dicarbonsäure handelt es sich ganz allgemein um zweiwertige aliphatische, cycloaliphatische, aromatische oder araliphatische Reste. Beispiele für solche Carbonsäuren sind weiter oben als Bildungskomponenten von Glycidylestern aufgezählt.

Die Hartsegmente der Formeln Ib, IIb und IIIb oder in Formel IV sind durch eine Erweichungstempertatur von grösser als 25°C gekennzeichnet. Im Falle von Hartsegmenten, die einen Kristallitschmelzpunkt aufweisen, bedeutet dies eine Schmelztemperatur oberhalb von 25°C. Im Falle von Hartsegmenten, die keinen Kristallitschmelzpunkt aufweisen, bedeutet dies, das die Glasumwandlungstemperatur der Hartsegmente im allgemeinen bei mindestens 0°C liegen sollte.

R₂ und R₃ leiten sich bevorzugt ab von gesättigten aliphatischen Dicarbonsäuren mit vier bis zwölf Kohlenstoffatomen, insbesondere von Adipinsäure und von Sebacinsäure; von cycloaliphatischen Dicarbonsäuren mit acht bis zwölf Kohlenstoffatomen, insbesondere von Tetra- oder Hexahydrophthalsäure, 4-Methyltetrahydrophthalsäure oder Hexahydroterephthalsäure; oder von aromatischen Dicarbonsäuren mit acht bis zwölf Kohlenstoffatomen, insbesondere von Phthalsäure, Isophthalsäure oder Terephthalsäure, wobei für R₃ cycloaliphatische und aromatische Dicarbonsäuren bevorzugt werden.

R₄ als zweiwertiger Rest eines Diols, Diamins oder Aminoalkohols mit einem Molekulargewicht von weniger als 400 leitet sich ganz allgemein von aliphatischen, cycloaliphatischen, aromatischen oder araliphatischen Verbindungen mit ein oder zwei primären, sekundären oder tertiären Alkoholgruppen und ein oder zwei primären oder sekundären Aminogruppen ab. Beispiele für Diole sind weiter oben als Bildungskomponenten von Glycidylethern aufgezählt.

Bevorzugte Reste R₄ leiten sich ab von gesättigten aliphatischen α,ω-Diolen, α,ω-Diaminen oder α,ω-Aminoalkoholen mit zwei bis zwölf Kohlenstoffatomen, insbesondere von Ethylenglykol, 1,3-Propandiol, 1,4-Butandiol, 1,6-Hexandiol, 1,8-Octandiol, 1,10-Decandiol oder von 1,12-Dodecandiol oder den entsprechenden Diaminen oder Aminoalkoholen; von cycloaliphatischen Diolen oder Diaminen mit sechs Ringkohlenstoffatomen, insbesondere von 1,4-Cyclohexandiol, 1,4-Diaminocyclohexan oder 1,4-Cyclohexandimethanol; oder von ein- oder zweikernigen Bisphenolen oder Diaminen mit sechs bis zwölf Kohlenstoffatomen, insbesondere von Resorcin, Hydrochinon, 2,2-Bis-(4-hydroxyphenyl)-propan, 2,2-Bis-(4-hydroxyphenyl)-methan, 2,2-Bis-(4-hydroxyphenyl)-ether,2,2-Bis-(4-hydroxyphenyl)-sulfon oder 4,4'-Dihydroxybiphenyl oder den entsprechenden Diaminen.

R₅ als zweiwertiger Rest einer aromatischen Hydroxy- oder Aminocarbonsäure kann ein- oder mehrkernig sein. Mehrere aromatische Reste können miteinander kondensiert sein oder sind über eine direkte C-C Bindung oder über eine Brückengruppe miteinander verbunden.

Bei R₅ handelt es sich vorzugsweise um einen Rest der Formel VIa und insbesondere der Formel VIb 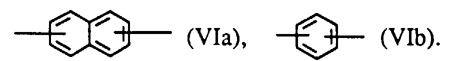 Dabei befinden sich die freien Valenzen in den Resten der Formel VIa vorzugsweise in 1,5- oder 1,8-Position und in den Resten der Formel VIb in 1,3- oder 1,4-Position.

Bei R₆ als zweiwertigem Rest eines Diglycidylethers handelt es sich ganz allgemein um zweiwertige aliphatische, cycloaliphatische, aromatische oder araliphatische Reste, solange diese Hartsegmente der Formel IIIb mit einer Erweichungstemperatur oberhalb von 25°C ergeben.

Im allgemeinen handelt es sich bei den R₆ zugrundeliegenden Diglycidylethern um Verbindungen auf Basis von Bisphenolen oder um Aufbauprodukte solcher Diglycidylether mit Bisphenolen. Beispiele dafür sind weiter oben als Komponente A) aufgeführt.

Die R₆ zugrundeliegenden Diole sind vorzugsweise aromatisch. Dabei kann es sich um ein- oder mehrkernige Reste handeln. Mehrere aromatische Reste können miteinander kondensiert sein oder sind über eine direkte C-C Bindung oder über eine Brückengruppe miteinander verbunden.

Vorzugsweise handelt es sich bei R₆ um Reste eines ein- oder zweikernigen Bisphenols oder um Reste der Formel VIIa oder VIIb 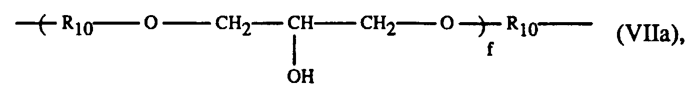 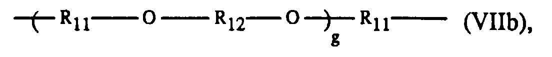 worin R₁₀ und R₁₁ unabhängig voneinander ein- oder mehrkernige Reste eines Bisphenols nach dem Entfernen der funktionellen Gruppen bedeuten, R₁₂ der Rest eines über eine -CO- oder -SO₂- Gruppe verbrückten zweikernigen Bisphenols nach dem Entfernen der funktionellen Gruppen bedeutet, der Index f eine ganze Zahl von 1 bis 50, besonders von 1 bis 20 und ganz besonders von 3 bis 10, bedeutet und der Index g eine ganze Zahl von 1 bis 100, besonders von 1 bis 10, ist.

R₁₀ und R₁₁ sind vorzugsweise Reste eines ein- oder zweikernigen Bisphenols.

Zu den besonders bevorzugten Bisphenolresten R₆, R₁₀ und R₁₁ zählen 1,3-Phenylen, 1,4-Phenylen und insbesondere die Strukturelemente der Formel VIII 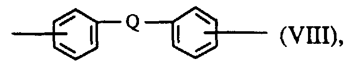 worin Q für eine direkte C-C Bindung, -CH₂-, -CH(CH₃)-, -C(CH₃)₂-, -C(CF₃)₂-, -O-, -S-, -CO- oder -SO₂- steht und worin die freien Valenzen sich vorzugsweise in 2,2′-, 3,3′- und insbesondere in 4,4′-Position zur Brücke Q befinden.

Zu den besonders bevorzugten Bisphenolresten R₆ und R₁₂ zählen Diphenylketon-4,4′-diyl und ganz besonders bevorzugt Diphenylsulfon-4,4′-diyl.

Ganz besonders bevorzugt ist R₆ ein Rest der Formeln IXa, IXb oder IXc 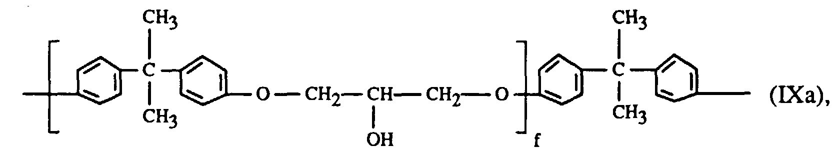 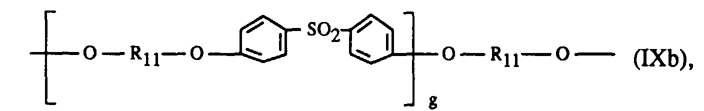 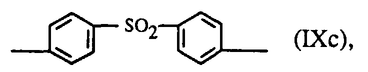 worin der Index f eine ganze Zahl von 3 bis 10 bedeutet, der Index g eine ganze Zahl von 1 bis 10 ist und R₁₁ die oben definierte Bedeutung besitzt, insbesondere 1,3-Phenylen, 1,4-Phenylen oder ein Rest der Formel VIII ist, worin Q für eine direkte C-C Bindung, -CH₂-, -CH(CH₃)-, -C(CF₃)₂-, -O-, -S- oder insbesondere für -C(CH₃)₂- steht und worin die freien Valenzen sich in 4,4′-Position zur Brücke Q befinden.

Der R₇ zugrundeliegende Alkylenrest eines Lactons oder Lactams kann geradkettig oder verzweigt sein und muss ein Hartsegment mit einer Erweichungstemperatur oberhalb von 25^{o}C ergeben. Ein Beispiel dafür ist der Rest des Pivalolactons oder des Capro- oder Lauryllactams.

R₈ als Alkyl ist vorzugsweise geradkettiges C₁-C₆Alkyl, insbesondere Methyl.

Die Copolyester vom Typ Ia/Ib oder IIa/IIb sind aus der US-A-3,723,568 bekannt, deren Offenbarung ebenfalls ein Gegenstand der vorliegenden Beschreibung ist.

Bevorzugte Zusammensetzungen enthalten als Komponente D) Copolyester aus wiederkehrenden Struktureinheiten der Formeln Ia und Ib oder IIa und IIb, worin R₁ sich von einem Polypropylenglykol oder insbesondere einem Polybutylenglykol ableitet, R₂ und R₃ sich von Terephthalsäure, Isophthalsäure oder einem Gemisch dieser Säuren ableiten, und R₄ der Rest eines Ethylen-, Butylen- oder Hexamethylenglykols oder eines Gemischs dieser Diole ist oder worin R₄ der Rest von Bisphenol A ist.

Besonders bevorzugte Zusammensetzungen enthalten als Komponente D) Copolyester, Copolyamide oder Copolyesteramide aus wiederkehrenden Struktureinheiten der Formeln IIIa und IIIb. Diese Copolymeren sind neu und ebenfalls ein Gegenstand der vorliegenden Erfindung.

Bevorzugte Copolyester, Copolyamide oder Copolyesteramide besitzen die wiederkehrenden Strukturelemente IIIa und IIIb, worin R₆ ein Rest eines ein- oder zweikernigen Bisphenols oder ein Rest der oben definierten Formel VIIa oder VIIb ist; davon sind besonders die Typen bevorzugt, worin R₁₀ und R₁₁ Reste der Formel VIII oder insbesondere der Formel IXb sind.

X, Y und Z sind vorzugsweise -O-.

Die Verbindungen enthaltend wiederkehrende Strukturelemente der Formeln Ia und Ib oder IIa und IIb, insbesondere die Polyester, besitzen bevorzugt Carboxylendgruppen. Diese Carboxylendgruppen können beispielsweise durch Verkappen von Hydroxylendgruppen mit Carbonsäureanhydriden erhalten werden.

Die Verbindungen enthaltend wiederkehrende Strukturelemente der Formeln IIIa und IIIb können phenolische Hydroxyl-, N-Alkylamino- oder O-Glycidylendgruppen besitzen. Bevorzugt werden die Verbindungen mit O-Glycidylendgruppen oder phenolischen Hydroxylendgruppen.

Die Verbindungen enthaltend Strukturelemente der Formel IV können z.B. phenolische Hydroxyl- oder Aminoendgruppen besitzen.

Die Polymeren der Komponente D) können nach an sich bekannten Verfahren hergestellt werden. So lassen sich die Polymeren enthaltend die wiederkehrenden Struktureinheiten der Formeln Ia und Ib oder der Formeln IIa und IIb durch Polykondensation von Diolen, Diaminen oder Aminoalkoholen der Formeln X und XI mit Dicarbonsäuren der Formeln XII und gegebenenfalls XIII oder mit deren polyester- oder polyamidbildenden Derivaten, wie Diestern oder Dichloriden, herstellen

H-X-R₁-X-H (X),

H-X-R₄-X-H (XI),

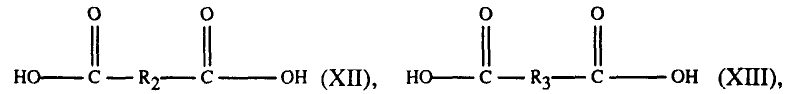

dabei besitzen R₁, R₂, R₃, R₄ und X die oben definierte Bedeutung.

Wünscht man Polymere mit Hydroxyl- oder Aminoendgruppen, so sind die Verbindungen X und XI im Ueberschuss vorzulegen. Liegen die Verbindungen XII und XIII im Überschuss vor, so entstehen carboxyl-terminierte Derivate. Carboxylendgruppen können auch durch Verkappen von Polymeren enthaltend Hydroxyl- oder Aminoendgruppen mit Carbonsäureanhydriden eingeführt werden.

Die Molekulargewichte der entstehenden Copolymeren lassen sich durch die Mengenverhältnisse von Carbonsäurekomponenten zu den Diol- bzw. Diamino- bzw. Aminoalkoholkomponenten einstellen. Die für ein gewünschtes Molekulargewicht zu verwendenden Verhältnisse sind dem Fachmann auf dem Gebiet der Polykondensation an sich bekannt.

Ferner ist es möglich, die Copolymeren enthaltend wiederkehrende Struktureinheiten der Formeln Ia und Ib oder der Formeln IIa und IIb durch Kondensation vorkondensierter Blöcke herzustellen. Dazu kann man beispielsweise die Verbindungen der Formeln X und XII und die Verbindungen der Formeln XI und XIII getrennt vorkondensieren, und über die Mengenverhältnisse der Ausgangsmaterialien einen Block gewünschten Molekulargewichts und gewünschter Endgruppen zu erhalten und diese Blöcke enthaltend jeweils verschiedene Endgruppen zum Copolymer D) kondensieren.

Die Copolymeren enthaltend wiederkehrende Struktureinheiten der Formeln IIIa und IIIb lassen sich durch Umsetzung von Verbindungen der Formel XIV mit Verbindungen der Formel XV oder durch Umsetzung von Verbindungen der Formel XVI mit Verbindungen der Formel XVII herstellen

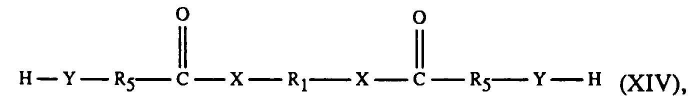

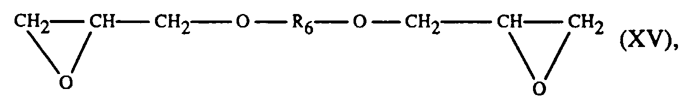

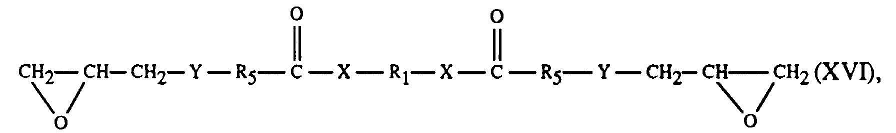

H-O-R₆-O-H (XVII);

dabei besitzen R₁, R₅, R₆, X und Y die weiter oben definierte Bedeutung.

Die Umsetzung der Diglycidylether XV mit den Verbindungen der Formel XIV bzw. der Diglycidylether XVI mit den Verbindungen der Formel XVII kann in Analogie zur oben beschriebenen Adduktbildung des Butadien-Acrylnitrilcopolymeren mit Epoxidharzen erfolgen. Durch die Auswahl der Mengen der Ausgangsprodukte lassen sich sowohl epoxid-terminierte Addukte als auch phenol- oder N-alkylamino-terminierte Addukte herstellen.

Die Copolymeren der Formel IV lassen sich durch Verkappung von Diolen, Diaminen oder Aminoalkoholen der oben definierten Formel X mit Lactonen oder Lactamen erhalten. Beispiele für solche Umsetzungen sind in der GB-A-1,565,580 zu finden.

Die Ausgangsprodukte der Formeln X bis XIII, worin Y -O- ist, sind an sich bekannt und grösstenteils im Handel erhältlich.

Die Ausgangsprodukte der Formeln XIV und XVI sind ebenfalls an sich bekannt und beispielsweise in der GB-A-1,017,612 beschrieben. Die Derivate dieser Ausgangsprodukte, worin Y -NR₈- ist lassen sich analog herstellen, indem man anstelle von aromatischen Hydroxycarbonsäuren aromatische N-Alkylaminocarbonsäuren zur Verkappung des Polyalkylenglykols einsetz.

Die Diglycidylether der Formel XV und die Diole der Formel XVII sind ebenfalls an sich bekannt und teilweise im Handel erhältlich.

Diglycidylether von Polyethersulfonen sind beispielsweise aus der DE-A-3,303,473 bekannt.

Komponenten A), C) und D) in den erfindungsgemässen Zusammensetzungen sollten miteinander verträglich sein. Die Auswahl dieser Komponenten erfolgt im allgemeinen so, dass im härtbaren Gemisch oberhalb dessen Erweichungstemperatur, vorzugsweise zwischen 100 und 180°C, keine sichtbare Phasentrennung erfolgt.

Komponenten C) und D) sollten sich zumindest bei erhöhter Temperatur im Epoxidharz A) lösen. Komponenten C) und D) sollten gemäss den oben aufgeführten Kriterien ausgewählt werden. Komponenten A), C) und D) werden vorzugsweise so ausgewählt, dass bei der Härtung der Zusammensetzung ein Mehrphasensystem entsteht.

Wünscht man Produkte mit hoher Festigkeit, Glasübergangstemperatur, Schälfestigkeit, Schlagzähigkeit und Rissfortpflanzungsbeständigkeit (Bruchzähigkeit), so wird der Anteil der Komponenten C) und D), bezogen auf die Menge an A), C) und D), im allgemeinen 60 Gew.% nicht überschreiten. Die untere Grenze richtet sich nach den gewünschten Eigenschaften, beispielsweise der Schälfestigkeit. In der Regel sollten Komponenten C) und D) mehr als 5 Gew.%, bevorzugt mehr als 10 Gew.%, ausmachen.

Das Gewichtsverhältnis von C) zu D) kann in weiten Bereichen variiert werden. Bevorzugter Bereich von C) zu D) ist 50:1 bis 1:50, insbesondere 5:1 bis 1:5.

Der Anteil des Epoxidharzes A) an der Gesamtmenge aus A), C) und D) beträgt 40 bis 95 Gew.%, bevorzugt 60 bis 80 Gew.%.

Die Menge an Härter B), bezogen auf das Epoxidharz A), ist im allgemeinen vom verwendeten Härtertyp abhängig und dem Fachmann an sich bekannt. Im Falle des besonders bevorzugten Dicyandiamids verwendet man pro Mol Epoxidgruppen vorzugsweise 0,1 bis 0,5 Mol des Härters.

Die erfindungsgemässen Zusammensetzungen enthalten gegebenenfalls noch einen Härtungsbeschleuniger E). Art und Menge von Komponente E) hängen in der Regel vom verwendeten Härtertyp ab und sind dem Fachmann auf der Gebiet der Epoxidhärtung an sich bekannt. Einzelheiten findet man im "Epoxy-Handbook" von Lee and Neville (Mc Graw Hill, New York 1969).

Die Härtungstemperaturen der erfindungsgemässen Zusammensetzungen liegen bei Verwendung von Dicyandiamidhärtersystemen vorzugsweise zwischen 80 und 280°C, besonders bevorzugt zwischen 100 und 200°C und bei Verwendung von phenolischen Härtersystemen etwa zwischen 100 und 250°C.

Die Härtung kann gewünschtenfalls auch in zwei Stufen vorgenommen werden, indem man z.B. den Härtungsvorgang unterbricht oder die härtbare Mischung bei tieferen Temperaturen teilweise härten lässt. Die dabei erhaltenen Produkte sind noch schmelzbare und lösliche Präkondensate (sogenannte "B-Stufenharze") und eignen sich beispielsweise als Pressmassen, Sinterpulver oder zur Herstellung von Prepregs.

Gewünschtenfalls kann man den härtbaren Gemischen zur Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, sowie Flammschutzmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten. Ferner können auch zusätzlich Thermoplaste zugesetzt werden, wie beispielsweise Polyester, Ethylencopolymere) Polysulfone oder Polyethersulfone.

Die erfindungsgemässen Zusammensetzungen lassen sich ganz allgemein zur Herstellung von gehärteten Produkten einsetzen, und können in der dem jeweils speziellen Anwendungsgebiet angepassten Formulierung, beispielsweise als Klebmittel, insbesondere als Schmelzkleber, als Matrixharze oder als Oberflächenbeschichtungsmittel einsetzen.

Die härtbaren Zusammensetzungen sind in der Regel fest oder wachsartig und lassen sich in dieser Form besonders in Kombination mit den üblichen Füll- und Zusatzstoffen als Schmelzkleber einsetzen.

Die Erfindung betrifft auch die Verwendung der härtbaren Gemische für die oben erwähnten Zwecke.

Die gehärteten Produkte zeichnen sich durch die eingangs geschilderten vorteilhaften und überraschenden Eigenschaften aus. Die Erfindung betrifft daher auch die Produkte, die durch Erhitzen der erfindungsgemässen Zusammensetzungen erhältlich sind.

Die folgenden Beispiele erläutern die Erfindung.

### 1. Herstellung der Copolymerkomponente D)

### 1.1. Copolymer D1

Eine Mischung aus 200 g bishydroxylterminiertem Polytetrahydrofuran (Mₙ = 2000), 238 g Hexandiol, 388 g Terephthalsäuredimethylester und 2 g Dibutylzinnoxid wird 6 Stunden bei 230°C polykondensiert, wobei Methanol abdestilliert. Nach 30 Minuten bei 300 mbar werden 37 g Phthalsäureanhydrid zugesetzt und 90 Minuten bei dieser Temperatur gerührt. Man erhält ein festes Harz mit den folgenden Analysendaten:
Viscosität (nach Epprecht): 3600 mPas (150°C):
Erweichungstemperatur: 140°C (nach Methode Kofler);
Schmelzpunkt (DSC): 134°C;
Säurezahl: 22,4 Äqu./kg;
Molekulargewicht (GPC): Mₙ = 2240; M_{w}/Mₙ = 6.0.

### 1.2. Copolymer D2

Wie im Beispiel 1.1. beschrieben werden 400 g bishydroxylterminiertes Polytetrahydrofuran (Mₙ = 2000), 226 g Hexandiol, 388 g Terephthalsäuredimethylester in Gegenwart von 2 g Dibutylzinnoxid kondensiert und mit 37 g Phthalsäureanhydrid verkappt. Man erhält ein Harz mit den folgenden Analysedaten:
Erweichungstemperatur (nach Kofler): 126°C;
Schmelztemperatur (DSC): 128°C;
Molekulargewicht (GPC): Mₙ = 2790, M_{w}/Mₙ = 4.9.

### 1.3. Copolymer D3

Wie in Beispiel 1.1. beschrieben werden 100 g bishydroxylterminiertes Polytetrahydrofuran (Mₙ = 2000), 244 g 1.6-Hexandiol, 388 g Terephthalsäuredimethylester in Gegenwart von 2 g Dibutylzinnoxid polykondensiert und mit 37 g Phthalsäureanhydrid verkappt. Man erhält ein festes Harz mit den folgenden Analysedaten:
Erweichungstemperatur (Kofler): 140°C;
Schmelztemperatur (DSC): 136°C;
Säurezahl: 16,3 mg KOH/g;
Molekulargewicht (GPC): Mₙ = 2040, M_{w}/Mₙ = 4.1.

### 1.4. Copolymer D4

Polytetrahydrofuran/Polybutylenterephthalat Copolymer (Hytrel® 4056) der Firma E.I. DuPont de Nemour & Co.

### 1.5. Copolymer D5

100 g bis-(p-hydroxybenzoat)-terminiertes Polytetrahydrofuran (Mₙ = 1560, 1.47 Äqu.phenolische OH/kg, η₂₅=6880 mPas) und 148,1 g Epoxidfestharz auf Bisphenol A-Basis (1,8 Äqu.Epoxid/kg) werden 2 Stunden bei 140°C in Gegenwart von 3 g Triphenylphosphin adduktiert. Man erhält ein Harz mit den folgenden Analysedaten:
Epoxidgehalt: 0,6 Äqu./kg;
Erweichungstemperatur (Kofler): 90°C.

### 1.6. Copolymer D6

Eine Mischung aus 50 g bis-(p-hydroxybenzoat)-terminiertem Polytetrahydrofuran (Mₙ = 1560, Gehalt phenolischer OH: 1,47 Äqu./kg, η₂₅=6880 mPas) und 105 g des Glycidylethers von p,p′-Dihydroxydiphenylsulfon (Epoxidgehalt 3,2 Äqu./kg, Erweichungstemperatur: 99°C) wird in Gegenwart von 2,5 g Triphenylphosphin 2 Stunden auf 140°C erhitzt. Man erhält ein festes Harz mit den folgenden Analysedaten:
Viskosität (Epprecht): 153600 mPas (150°C);
Epoxidgehalt: 1,14 Äqu./kg;
Erweichungstemperatur (Kofler): 90°C.

### 2. Herstellung der Butadien-Acrylnitrilkomponente C)

### 2.1. Addukt C1

Eine Mischung aus 730 g Bisphenol A-diglycidylether (Epoxidgehalt: 5,4 Äqu./kg), 200 g carboxylterminiertem Acrylnitril/Butadien Copolymer (26% Acrylnitrilgehalt, Säurezahl 32 mg KOH/g), 64 g Bisphenol A und 5 g Triphenylphosphin wird 3 Stunden auf 130°C erhitzt bis sich ein viskoses Harz mit einem Epoxidgehalt von 3,3 Äqu./kg und einer Viskosität nach Epprecht von 130000 mPas (40°C) bildet.

### 3. Formulierungen und Materialprüfung

Wie in Tabelle I beschrieben werden Mischungen hergestellt und geprüft. Die Bestimmung der Zugscherfestigkeiten auf sandgestrahlten entfetteten 1,5 mm-dicken Aluminiumblechen (Avional) erfolgt gemäss DIN 53 283. Die Bestimmung der Winkelschälfestigkeit auf 0,8 mm-dickem entfettetem Stahlblech (1403) erfolgt gemäss DIN 53 282. Gehärtet wird 30 Minuten bei 180°C mit einer Härtermischung bestehend aus 5 Teilen Bisphenol A-diglycidylether (Epoxidgehalt: 5,4 Äqu./kg), 3,8 Teilen Dicyandiamid und 1,0 Teilen Chlortoluron [N-(3-Chlor-4-methylphenyl)-N′,N′-dimethylharnstoff].

Die Mengenangaben in der Tabelle sind Gewichtsteile.

**Tabelle I:**

| Geprüfte Klebstofformulierungen | | | | | | |
|---|---|---|---|---|---|---|
| Beispiel | 3.1. | 3.2. | 3.3. | 3.4. | 3.5. | 3.6. |
| Bisphenol A-diglycidylether (Epoxidgehalt 5,4 Aequ./kg) | 8 | 8 | 8 | 10 | 8 | 10 |
| Epoxidfestharz auf Bisphenol A-Basis (Epoxidgehalt 1,9 Aequ./kg) | 3 | 3 | 3 | - | 3 | 2 |
| Addukt C1 | 3 | 3 | 3 | 3 | 3 | 3 |
| Copolymer D1 | 6 | - | - | - | - | - |
| Copolymer D2 | - | 6 | - | - | - | - |
| Copolymer D3 | - | - | 6 | - | - | - |
| Copolymer D4 | - | - | - | 3 | - | - |
| Copolymer D5 | - | - | - | - | 6 | - |
| Copolymer D6 | - | - | - | - | - | 6 |
| Härtermischung | 1,3 | 1,3 | 1,3 | 1,3 | 1,3 | 1,3 |
| Erweichungstemp.(°C) | 60 | 50 | 80 | 80 | 70 | 60 |
| Zugscherfestigk.(N/mm2) | 31,8 | 30,1 | 35,7 | 32,7 | 31,0 | 40,2 |
| Winkelschälfestigk.(N/mm) | 3,6 | 3,1 | 3,0 | 4,8 | 5,5 | 6,1 |
| (%) Kohäsionsbruch | 80 | 100 | 90 | 100 | 30 | 100 |

## Patentansprüche (Patentansprüche für folgende(n) Vertragsstaat(en): CH, DE, FR, GB, IT, LI, SE)

1. Zusammensetzungen enthaltend
A) 40 bis 95 Gew.% eines Epoxidharzes mit durchschnittlich mehr als einer Epoxidgruppe pro Molekül,
B) einen bei erhöhter Temperatur aktivierbaren Härter für Komponente A),
C) ein bei Temperaturen unterhalb von 80°C fliessfähiges Copolymeres auf Basis von Butadien, Acrylnitril und gegebenenfalls weiteren ethylenisch ungesättigten Comonomeren, und
D) ein segmentiertes Copolymeres enthaltend Weich- und Hartsegmente der Formeln la und Ib oder der Formeln IIa und IIb oder der Formeln IIIa und IIIb oder eine Kombination von Weich- und Hartsegmenten der Formel IV 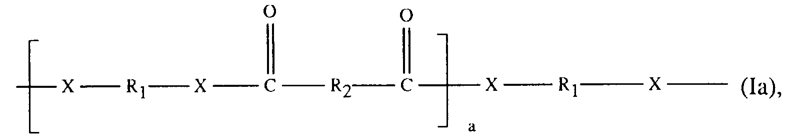 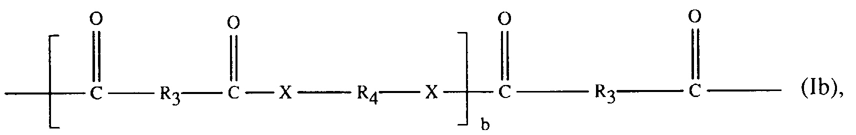 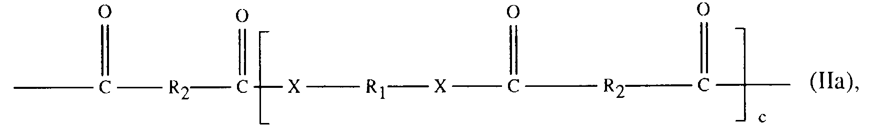 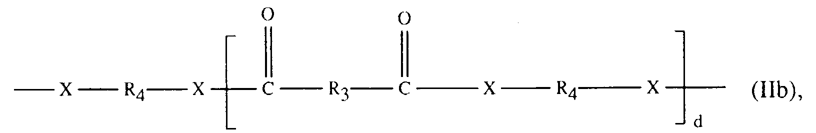 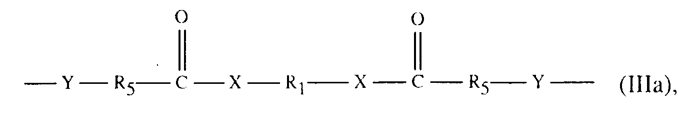 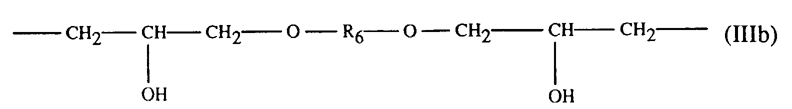 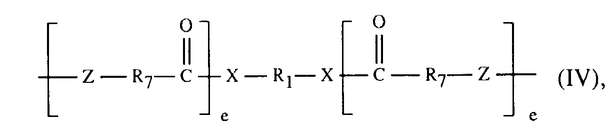
worin die Hartsegmente der Formeln Ib, IIb, und die Hartsegmente -[CO-R₇-Z]- in Formel IV eine Erweichungstemperatur oberhalb von 25°C besitzen, R₁ der zweiwertige Rest eines Polyalkylenglykols mit einem durchschnittlichen Molekulargewicht (Zahlenmittel) zwischen 500 und 5000 bestehend im wesentlichen aus Polypropylenglykol- oder Polybutylenglykoleinheiten nach dem Entfernen der Hydroxyl- oder Aminoendgruppen bedeutet, R₂ und R₃ unabhängig voneinander der zweiwertige Rest einer Dicarbon säure nach dem Entfernen der Carboxylgruppen sind, R₄ ein zweiwertiger Rest eines Diols, Diamins oder Aminoalkohols mit einem Molekulargewicht von weniger als 400 nach dem Entfernen der funktionellen Gruppen bedeutet, R₅ ein zweiwertiger Rest einer aromatischen Hydroxycarbonsäure oder Aminocarbonsäure nach dem Entfernen der funktionellen Gruppen ist, R₆ ein zweiwertiger Rest eines aromatischen Diglycidylethers nach dem Entfernen der funktionellen Gruppen bedeutet, R₇ ein Alkylenrest ist oder eine der für R₅ definierten Bedeutungen annimmt, X und Z unabhängig voneinander -O- oder -NH-bedeuten, Y -O- oder -NR₈- ist, R₈ Alkyl bedeutet, die Indizes a und c unabhängig voneinander eine ganze Zahl von 0 bis 100 bedeuten, die Indizes b und d unabhängig voneinander eine ganze Zahl von 1 bis 100 bedeuten und der Index e eine ganze Zahl von 1 bis 50 ist, wobei die Komponente A) im Falle, dass D) ein segmentiertes Copolymeres enthaltend Weich- und Hartsegmente der Formeln der Formeln IIIa und IIIb ist, ein fester Diglycidylether auf Basis von Bisphenol A oder eine feste Kombination dieser Harze mit flüssigen Diglycidylethern auf Basis von Bisphenol A ist und wobei es ausgeschlossen ist, dass e gleich 1 ist, wenn R₇ ein zweiwertiger Rest einer aromatischen Hydroxycarbonsäure oder Aminocarbonsäure nach dem Entfernen der funktionellen Gruppen ist.

2. Zusammensetzungen gemäss Anspruch 1 dadurch gekennzeichnet, dass Komponente A) ein Glycidylether, insbesondere ein Diglycidylether auf Bisphenol Basis, oder ein glycidylisierter Novolak, insbesondere ein glycidylisierter Novolak auf Basis von Phenol-Formaldehyd oder auf Basis von Kresol-Formaldehyd ist.

3. Zusammensetzungen gemäss Anspruch 1 dadurch gekennzeichnet, dass Komponente B) ein Amidin, insbesondere Dicyandiamid, ist.

4. Zusammensetzungen gemäss Anspruch 1 dadurch gekennzeichnet, dass das durchschnittliche Molekulargewicht (Zahlenmittel) der Komponente C) 1000-5000 und der Acrylnitrilgehalt 8 bis 30 Gew.%, bezogen auf den Gesamtmonomergehalt beträgt.

5. Zusammensetzungen gemäss Anspruch 1 dadurch gekennzeichnet, dass als Komponente D) Copolyester aus wiederkehrenden Struktureinheiten der Formeln Ia und Ib oder IIa und IIb verwendet werden, worin R₁ sich von einem Polypropylenglykol oder insbesondere einem Polybutylenglykol ableitet, R₂ und R₃ sich von Terephthalsäure, Isophthalsäure oder einem Gemisch dieser Säuren ableiten, und R₄ der Rest eines Ethylen-, Butylen- oder Hexamethylenglykols oder eines Gemischs dieser Diole ist oder worin R₄ der Rest von Bisphenol A ist.

6. Zusammensetzungen gemäss Anspruch 1 dadurch gekennzeichnet, dass als Komponente D) Copolyester aus wiederkehrenden Struktureinheiten der Formeln IIIa und IIIb verwendet werden.

7. Zusammensetzungen gemäss Anspruch 6 dadurch gekennzeichnet, dass R₆ ein Rest eines ein oder zweikernigen Bispenols oder ein Rest der Formel VIIa oder VIIb ist 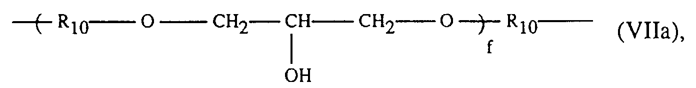 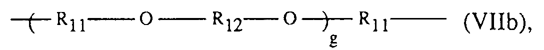 worin R₁₀ und R₁₁ unabhängig voneinander ein- oder mehrkernige Reste eines Bisphenols nach dem Entfernen der funktionellen Gruppen bedeuten, R₁₂ der Rest eines über eine -CO- oder -SO₂- Gruppe verbrückten zweikernigen Bisphenols nach dem Entfernen der funktionellen Gruppen bedeutet, der Index f eine ganze Zahl von 1 bis 50 bedeutet und der Index g eine ganze Zahl von 1 bis 100 ist.

8. Copolyester, Copolyamide und Copolyesteramide enthaltend die wiederkehrenden Struktureinheiten der Formel IIIa und IIIb gemäss Anspruch 1, wobei R₆ ein Rest der Formel IXa, IXb oder IXc ist 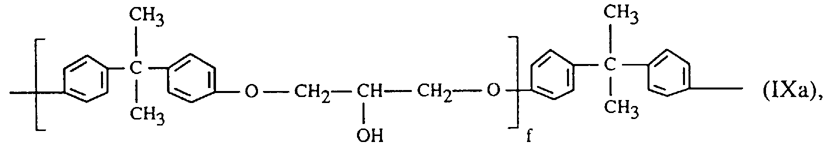 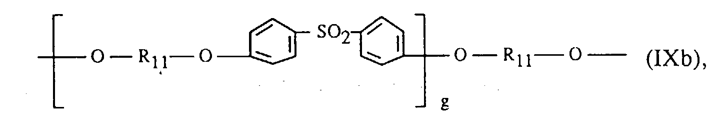 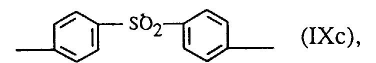 worin der Index f eine ganze Zahl von 3 bis 10 bedeutet, der Index g eine ganze Zahl von 1 bis 10 ist und R₁₁ 1,3-Phenylen, 1,4-Phenylen und insbesondere ein Rest der Formel VIII ist 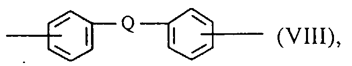 worin Q für eine direkte C-C Bindung, -CH₂-, -CH(CH₃)-, -C(CF₃)₂-, -O-, -S- oder insbesondere für -C(CH₃)₂- steht und worin die freien Valenzen sich in 4,4'-Position zur Brücke Q befinden.

9. Zusammensetzungen gemäss Anspruch 6 dadurch gekennzeichnet, dass R₆ ein Rest der Formel IXa, IXb oder IXc ist 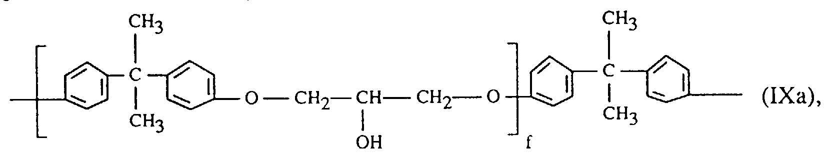 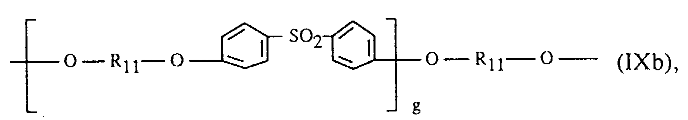 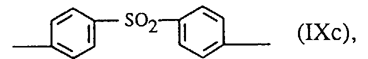 worin der Index f eine ganze Zahl von 3 bis 10 bedeutet, der Index g eine ganze Zahl von 1 bis 10 ist und R₁₁ 1,3-Phenylen, 1,4-Phenylen und insbesondere ein Rest der Formel VIII ist 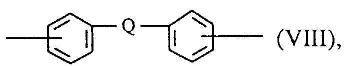 worin Q für eine direkte C-C Bindung, -CH₂-, -CH(CH₃)-, -C(CF₃)₂-, -O-, -S- oder insbesondere für -C(CH₃)₂- steht und worin die freien Valenzen sich in 4,4'-Position zur Brücke Q befinden.

10. Zusammensetzungen gemäss Anspruch 1 oder Copolymere gemäss Anspruch 8 dadurch gekennzeichnet, dass X, Y und Z -O- sind.

11. Verwendung der Zusammensetzungen gemäss Anspruch 1 als Klebmittel, insbesondere als Schmelzkleber, als Matrixharze oder als Oberflächenbeschichtungsmittel.

12. Gehärtete Produkte erhältlich durch Erhitzen der Zusammensetzungen gemäss Anspruch 1.

## Patentansprüche (Patentansprüche für folgende(n) Vertragsstaat(en): ES)

1. Zusammensetzungen enthaltend
A) 40 bis 95 Gew.% eines Epoxidharzes mit durchschnittlich mehr als einer Epoxidgruppe pro Molekül,
B) einen bei erhöhter Temperatur aktivierbaren Härter für Komponente A),
C) ein bei Temperaturen unterhalb von 80°C fliessfähiges Copolymeres auf Basis von Butadien, Acrylnitril und gegebenenfalls weiteren ethylenisch ungesättigten Comonomeren, und
D) ein segmentiertes Copolymeres enthaltend Weich- und Hartsegmente der Formeln Ia und Ib oder der Formeln IIa und IIb oder der Formeln IIIa und IIIb oder eine Kombination von Weich- und Hartsegmenten der Formel IV 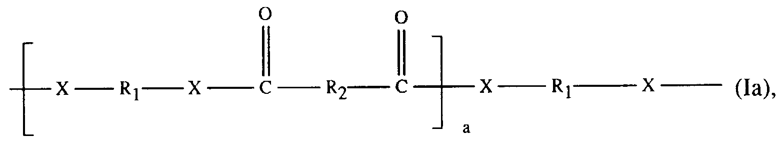 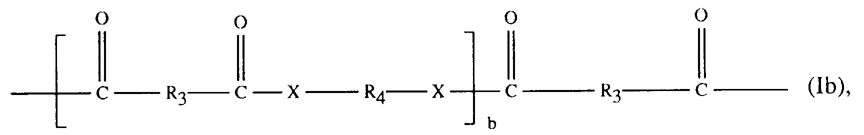 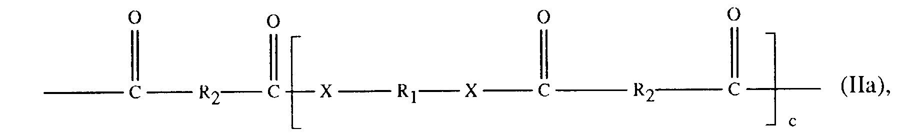 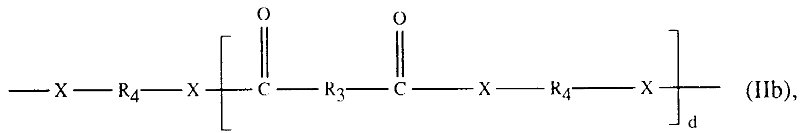 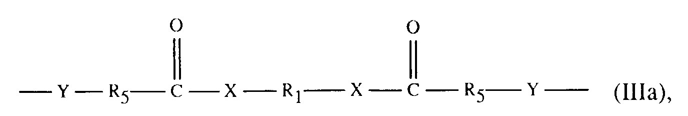 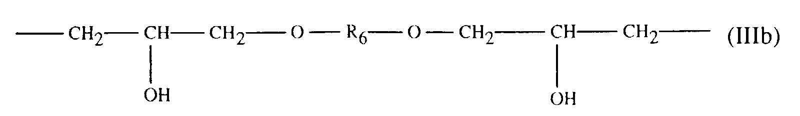 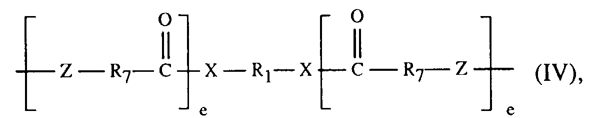
worin die Hartsegmente der Formeln Ib, IIb, und die Hartsegmente -(CO-R₇-Z]- in Formel IV eine Erweichungstemperatur oberhalb von 25°C besitzen, R₁ der zweiwertige Rest eines Polyalkylenglykols mit einem durchschnittlichen Molekulargewicht (Zahlenmittel) zwischen 500 und 5000 bestehend im wesentlichen aus Polypropylenglykol- oder Polybutylenglykoleinheiten nach dem Entfernen der Hydroxyl- oder Aminoendgruppen bedeutet, R₂ und R₃ unabhängig voneinander der zweiwertige Rest einer Dicarbon säure nach dem Entfernen der Carboxylgruppen sind, R₄ ein zweiwertiger Rest eines Diols, Diamins oder Aminoalkohols mit einem Molekulargewicht von weniger als 400 nach dem Entfernen der funktionellen Gruppen bedeutet, R₅ ein zweiwertiger Rest einer aromatischen Hydroxycarbonsäure oder Aminocarbonsäure nach dem Entfernen der funktionellen Gruppen ist, R₆ ein zweiwertiger Rest eines aromatischen Diglycidylethers nach dem Entfernen der funktionellen Gruppen bedeutet, R₇ ein Alkylenrest ist oder eine der für R₅ definierten Bedeutungen annimmt, X und Z unabhängig voneinander -O- oder -NH-bedeuten, Y -O- oder -NR₈- ist, R₈ Alkyl bedeutet, die Indizes a und c unabhängig voneinander eine ganze Zahl von 0 bis 100 bedeuten, die Indizes b und d unabhängig voneinander eine ganze Zahl von 1 bis 100 bedeuten und der Index e eine ganze Zahl von 1 bis 50 ist, wobei die Komponente A) im Falle, dass D) ein segmentiertes Copolymeres enthaltend Weich- und Hartsegmente der Formeln der Formeln IIIa und IIIb ist, ein fester Diglycidylether auf Basis von Bisphenol A oder eine feste Kombination dieser Harze mit flüssigen Diglycidylethern auf Basis von Bisphenol A ist und wobei es ausgeschlossen ist, dass e gleich 1 ist, wenn R₇ ein zweiwertiger Rest einer aromatischen Hydroxycarbonsäure oder Aminocarbonsäure nach dem Entfernen der funktionellen Gruppen ist.

2. Zusammensetzungen gemäss Anspruch 1 dadurch gekennzeichnet, dass Komponente A) ein Glycidylether, insbesondere ein Diglycidylether auf Bisphenol Basis, oder ein glycidylisierter Novolak, insbesondere ein glycidylisierter Novolak auf Basis von Phenol-Formaldehyd oder auf Basis von Kresol-Formaldehyd ist.

3. Zusammensetzungen gemäss Anspruch 1 dadurch gekennzeichnet, dass Komponente B) ein Amidin, insbesondere Dicyandiamid, ist.

4. Zusammensetzungen gemäss Anspruch 1 dadurch gekennzeichnet, dass das durchschnittliche Molekulargewicht (Zahlenmittel) der Komponente C) 1000-5000 und der Acrylnitrilgehalt 8 bis 30 Gew.%, bezogen auf den Gesamtmonomergehalt beträgt.

5. Zusammensetzungen gemäss Anspruch 1 dadurch gekennzeichnet, dass als Komponente D) Copolyester aus wiederkehrenden Struktureinheiten der Formeln Ia und Ib oder IIa und IIb verwendet werden, worin R₁ sich von einem Polypropylenglykol oder insbesondere einem Polybutylenglykol ableitet, R₂ und R₃ sich von Terephthalsäure, Isophthalsäure oder einem Gemisch dieser Säuren ableiten, und R₄ der Rest eines Ethylen-, Butylen- oder Hexamethylenglykols oder eines Gemischs dieser Diole ist oder worin R₄ der Rest von Bisphenol A ist.

6. Zusammensetzungen gemäss Anspruch 1 dadurch gekennzeichnet, dass als Komponente D) Copolyester aus wiederkehrenden Struktureinheiten der Formeln IIIa und IIIb verwendet werden.

7. Zusammensetzungen gemäss Anspruch 6 dadurch gekennzeichnet, dass R₆ ein Rest eines ein oder zweikernigen Bispenols oder ein Rest der Formel VIIa oder VIIb ist 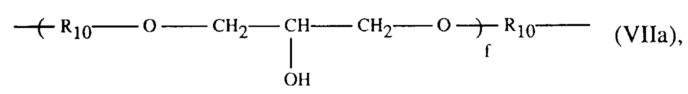 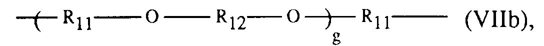 worin R₁₀ und R₁₁ unabhängig voneinander ein- oder mehrkernige Reste eines Bisphenols nach dem Entfernen der funktionellen Gruppen bedeuten, R₁₂ der Rest eines über eine -CO- oder -SO₂- Gruppe verbrückten zweikernigen Bisphenols nach dem Entfernen der funktionellen Gruppen bedeutet, der Index f eine ganze Zahl von 1 bis 50 bedeutet und der Index g eine ganze Zahl von 1 bis 100 ist.

8. Verfahren zur Herstellung von Copolyestern, Copolyamiden und Copolyesteramiden enthaltend die wiederkehrenden Strukturelemente der Formel IIIa und IIIb gemäss Anspruch 1, dadurch gekennzeichnet, dass Verbindungen der Formel XIV mit Verbindungen der Formel XV oder Verbindungen der Formel XVI mit Verbindungen der Formel XVII umgesetzt werden 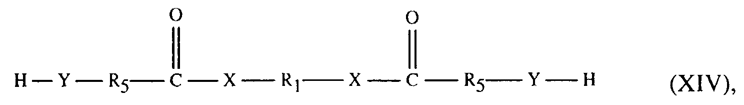 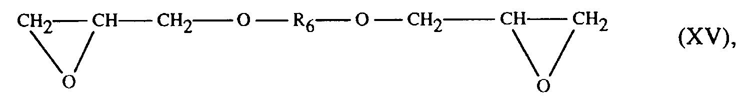 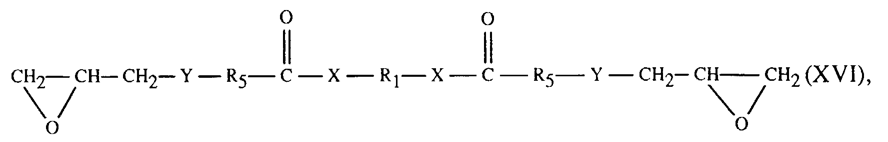
H-O-R₆-O-H (XVII),
worin R₁, R₅, X und Y die in Anspruch 1 definierte Bedeutung besitzen und R₆ ein Rest der Formel IXa, IXb oder IXc ist 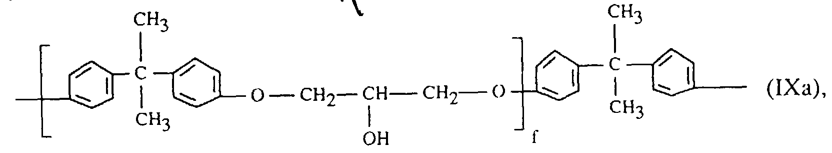 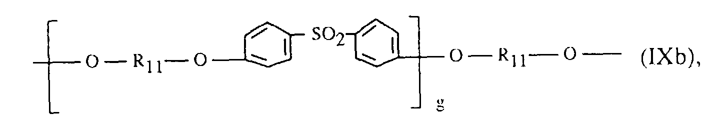 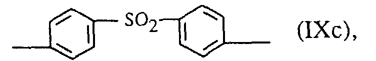 worin der Index f eine ganze Zahl von 3 bis 10 bedeutet, der Index g eine ganze Zahl von 1 bis 10 ist und R₁₁ 1.3-Phenylen, 1,4-Phenylen und insbesondere ein Rest der Formel VIII ist 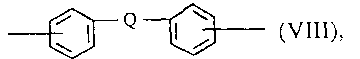 worin Q für eine direkte C-C Bindung, -CH₂-, -CH(CH₃)-, -C(CF₃)₂-, -O-, -S- oder insbesondere für -C(CH₃)₂- steht und worin die freien Valenzen sich in 4,4'-Position zur Brücke Q befinden.

9. Zusammensetzungen gemäss Anspruch 6 gekennzeichnet, dass R₆ ein Rest der Formel IXa, IXb oder IXc ist 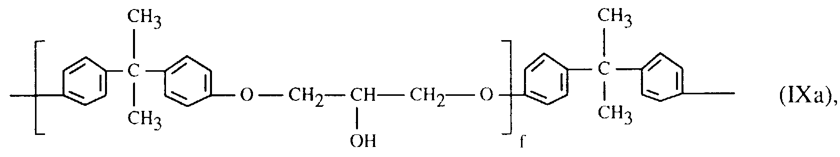 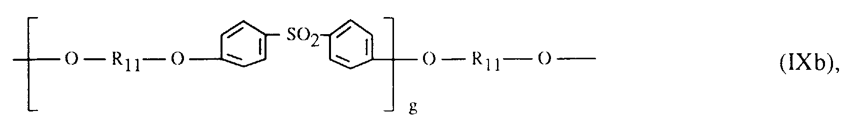 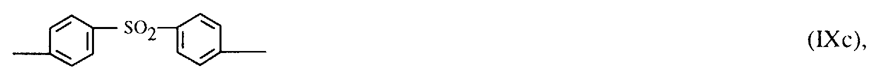 worin der Index f eine ganze Zahl von 3 bis 10 bedeutet, der Index g eine ganze Zahl von 1 bis 10 ist und R₁₁ 1,3-Phenylen, 1,4-Phenylen und insbesondere ein Rest der Formel VIII ist 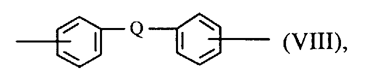 worin Q für eine direkte C-C Bindung, -CH₂-, -CH(CH₃)-, -C(CF₃)₂-, -O-, -S- oder insbesondere für -C(CH₃)₂- steht und worin die freien Valenzen sich in 4,4'-Position zur Brücke Q befinden.

10. Zusammensetzungen gemäss Anspruch 1 oder Verfahren gemäss Anspruch 8 dadurch gekennzeichnet, dass X, Y und Z -O- sind.

11. Verwendung der Zusammensetzungen gemäss Anspruch 1 als Klebmittel, insbesondere als Schmelzkleber, als Matrixharze oder als Oberflächenbeschichtungsmittel.

12. Verfahren zur Herstellung gehärteter Produkte, dadurch gekennzeichnet, dass man Zusammensetzungen gemäss Anspruch 1 erhitzt.

13. Verfahren gemäss Anspruch 12, dadurch gekennzeichnet dass man eine Zusammensetzung gemäss einem der Ansprüche 2 bis 7, 9 oder 10 verwendet.

## Claims (Claims for the following Contracting State(s): CH, DE, FR, GB, IT, LI, SE)

1. A composition comprising
A) from 40 to 95% by weight of an epoxy resin having on average more than one epoxide group per molecule,
B) a curing agent which can be activated at an elevated temperature for component A),
C) a copolymer based on butadiene, acrylonitrile and, if desired, other ethylenically unsaturated comonomers, which is liquid at temperatures below 80°C, and
D) a segmented copolymer comprising soft and hard segments of the formulae Ia and Ib or of the formulae IIa and IIb or of the formulae IIIa and IIIb or a combination of soft and hard segments of the formula IV 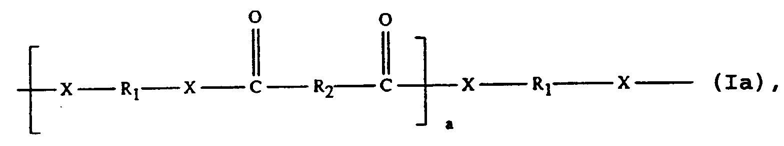 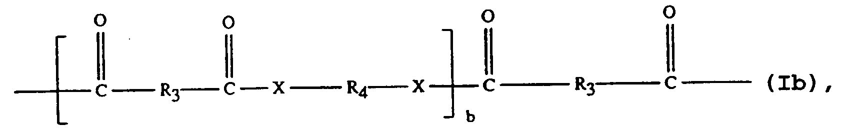 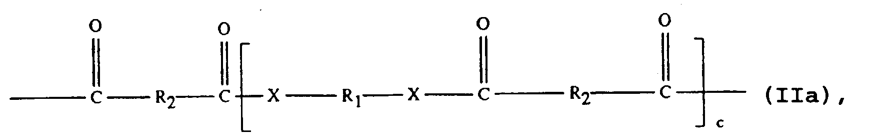 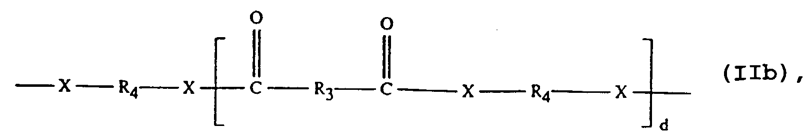 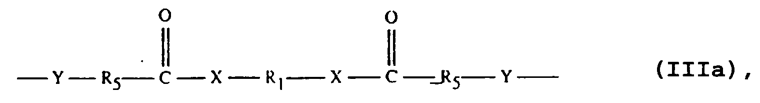 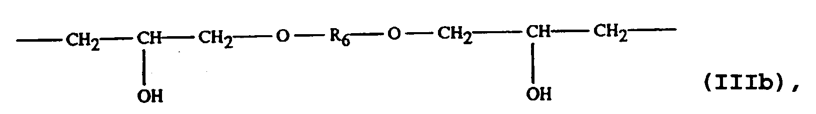 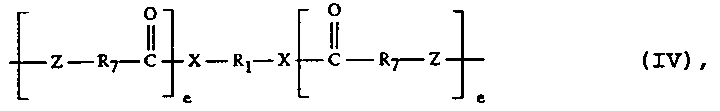 in which the hard segments of the formulae Ib, IIb and the hard segments -[CO-R₇-Z]- in formula IV have a softening point above 25°C, R₁ is the divalent radical of a polyalkylene glycol having an average molecular weight (number average) of between 500 and 5000 and consisting essentially of polypropylene glycol or polybutylene glycol units after the removal of the hydroxyl or amino end groups, R₂ and R₃ independently of one another are the divalent radical of a dicarboxylic acid after the removal of the carboxyl groups, R₄ is a divalent radical of a diol, diamine or amino alcohol having a molecular weight of less than 400 after the removal of the functional groups, R₅ is a divalent radical of an aromatic hydroxycarboxylic acid or aminocarboxylic acid after the removal of the functional groups, R₆ is a divalent radical of an aromatic diglycidyl ether after the removal of the functional groups, R₇ is an alkylene radical or has one of the meanings defined for R₅, X and Z independently of one another are -0- or -NH-, Y is -O- or -NR₈-, R₈ is alkyl, the indices a and c independently of one another are an integer from 0 to 100, the indices b and d independently of one another are an integer from 1 to 100 and the index e is an integer from 1 to 50, where component A), if D) is a segmented copolymer comprising soft and hard segments of the formulae IIIa and IIIb, is a solid diglycidyl ether based on bisphenol A or a solid combination of these resins with liquid diglycidyl ethers based on bisphenol A, and with the exclusion of e as 1 if R₇ is a divalent radical of an aromatic hydroxycarboxylic acid or aminocarboxylic acid after the removal of the functional groups.

2. A composition according to claim 1, wherein component A) is a glycidyl ether, particularly a diglycidyl ether based on a bisphenol, or a glycidylated novolac, particularly a glycidylated novolac based on phenol-formaldehyde or based on cresol-formaldehyde.

3. A composition according to claim 1, wherein component B) is an amidine, particularly dicyandiamide.

4. A composition according to claim 1, wherein the average molecular weight (number average) of the component C) is 1000 - 5000 and the acrylonitrile content is 8 to 30% by weight, relative to the total monomer content.

5. A composition according to claim 1, wherein the component D) used is a copolyester composed of recurring structural units of the formulae Ia and Ib or IIa and IIb in which R₁ is derived from a polypropylene glycol or particularly from a polybutylene glycol, R₂ and R₃ are derived from terephthalic acid, isophthalic acid or a mixture of these acids, and R₄ is the radical of an ethylene, butylene or hexamethylene glycol or of a mixture of these diols, or R₄ is the radical of bisphenol A.

6. A composition according to claim 1, wherein the component D) used is a copolyester composed of recurring structural units of the formulae IIIa and IIIb.

7. A composition according to claim 6, wherein R₆ is a radical of a mononuclear or dinuclear bisphenol or a radical of the formula VIIa or VIIb 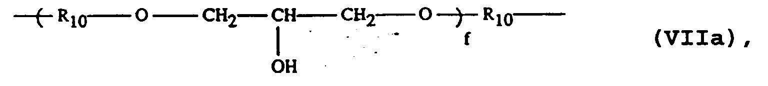 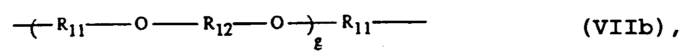 in which R₁₀ and R₁₁ independently of one another are mononuclear or polynuclear radicals of a bisphenol after the functional groups have been removed, R₁₂ is the radical of a dinuclear bisphenol bridged via a -CO- or -SO₂- group, after the functional groups have been removed, the index f is an integer from 1 to 50 and the index g is an integer from 1 to 100.

8. A copolyester, copolyamide or copolyester-amide comprising the recurring structural units of the formulae IIIa and IIIb according to claim 1, wherein R₆ is a radical of the formula IXa, IXb or IXc 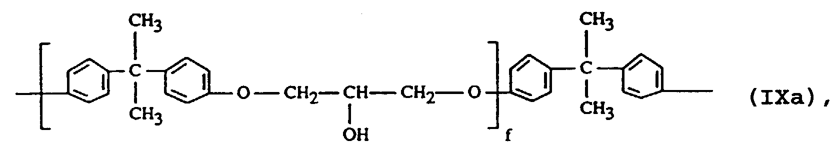 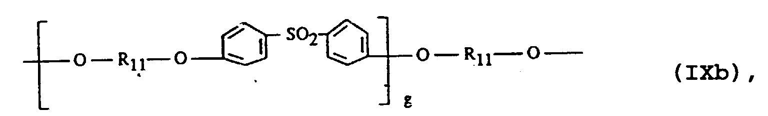 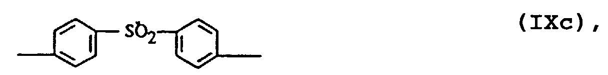 in which the index f is an integer from 3 to 10, the index g is an integer from 1 to 10 and R₁₁ is 1,3-phenylene, 1,4-phenylene or particularly a radical of the formula VIII 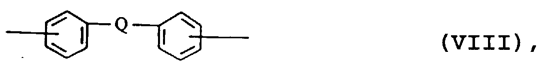 in which Q is a direct C-C bond, -CH₂-, -CH(CH₃)-, -C(CF₃)₂-, -O-, -S- or particularly -C(CH₃)₂- and the free valencies are located in the 4,4'-position relative to the bridge Q.

9. A composition according to claim 6, wherein R₆ is a radical of the formula IXa, IXb or IXc 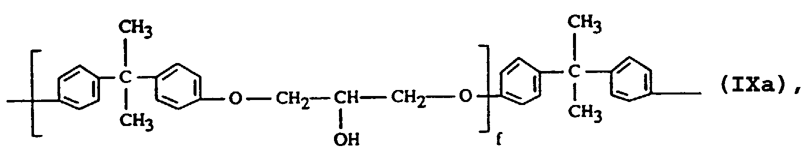 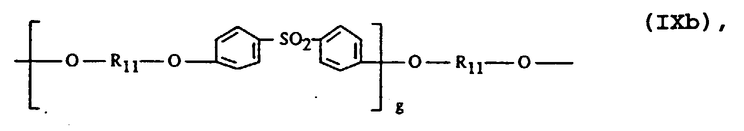 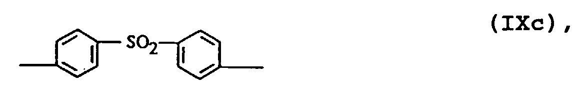 in which the index f is an integer from 3 to 10, the index g is an integer from 1 to 10 and R₁₁ is 1,3-phenylene, 1,4-phenylene or particularly a radical of the formula VIII 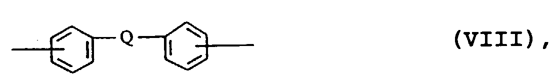 in which Q is a direct C-C bond, -CH₂-, -CH(CH₃)-, -C(CF₃)₂-, -O-, -S- or particularly -C(CH₃)₂- and the free valencies are located in the 4,4'-position relative to the bridge Q.

10. A composition according to claim 1 or a copolymer according to claim 8, wherein X, Y and Z are -O-.

11. The use of a composition according to claim 1 as an adhesive, in particular a hot-melt adhesive, as a matrix resin or as a surface coating material.

12. A cured product obtainable by heating a composition according to claim 1.

## Claims (Claims for the following Contracting State(s): ES)

1. A composition comprising
A) from 40 to 95% by weight of an epoxy resin having on average more than one epoxide group per molecule,
B) a curing agent which can be activated at an elevated temperature for component A),
C) a copolymer based on butadiene, acrylonitrile and, if desired, other ethylenically unsaturated comonomers, which is liquid at temperatures below 80°C, and
D) a segmented copolymer comprising soft and hard segments of the formulae Ia and Ib or of the formulae IIa and IIb or of the formulae IIIa and IIIb or a combination of soft and hard segments of the formula IV 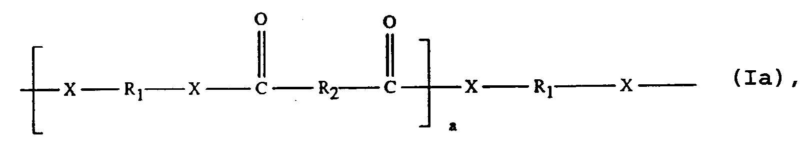 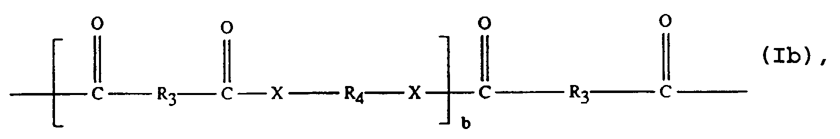 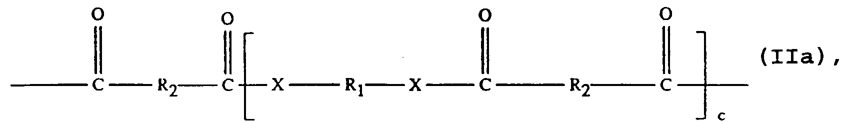 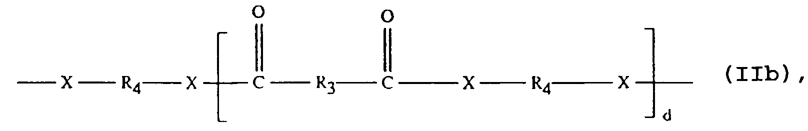 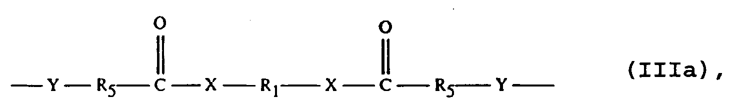 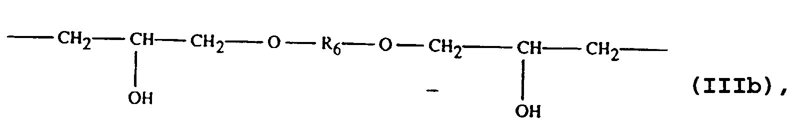 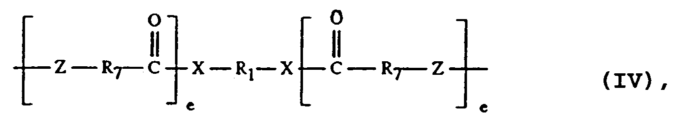 in which the hard segments of the formulae Ib, IIb and the hard segments -[CO-R₇-Z]- in formula IV have a softening point above 25°C, R₁ is the divalent radical of a polyalkylene glycol having an average molecular weight (number average) of between 500 and 5000 consisting essentially of polypropylene glycol or polybutylene glycol units after the removal of the hydroxyl or amino end groups, R₂ and R₃ independently of one another are the divalent radical of a dicarboxylic acid after the removal of the carboxyl groups, R₄ is a divalent radical of a diol, diamine or amino alcohol having a molecular weight of less than 400 after the removal of the functional groups, R₅ is a divalent radical of an aromatic hydroxycarboxylic acid or aminocarboxylic acid after the removal of the functional groups, R₆ is a divalent radical of an aromatic diglycidyl ether after the removal of the functional groups, R₇ is an alkylene radical or has one of the meanings defined for R₅, X and Z independently of one another are -o- or -NH-, Y is -O- or -NR₈-, R₈ is alkyl, the indices a and c independently of one another are an integer from 0 to 100, the indices b and d independently of one another are an integer from 1 to 100 and the index e is an integer from 1 to 50, where component A), if D) is a segmented copolymer comprising soft and hard segments of the formulae IIIa and IIIb, is a solid diglycidyl ether based on bisphenol A or a solid combination of these resins with liquid diglycidyl ethers based on bisphenol A, and with the exclusion of e as 1 if R₇ is a divalent radical of an aromatic hydroxycarboxylic acid or aminocarboxylic acid after the removal of the functional groups.

2. A composition according to claim 1, wherein component A) is a glycidyl ether, particularly a diglycidyl ether based on a bisphenol, or a glycidylated novolac, particularly a glycidylated novolac based on phenol-formaldehyde or based on cresol-formaldehyde.

3. A composition according to claim 1, wherein component B) is an amidine, particularly dicyandiamide.

4. A composition according to claim 1, wherein the average molecular weight (number average) of the component C) is 1000 - 5000 and the acrylonitrile content is 8 to 30% by weight, relative to the total monomer content.

5. A composition according to claim 1, wherein the component D) used is a copolyester composed of recurring structural units of the formulae Ia and Ib or IIa and IIb in which R₁ is derived from a polypropylene glycol or particularly from a polybutylene glycol, R₂ and R₃ are derived from terephthalic acid, isophthalic acid or a mixture of these acids, and R₄ is the radical of an ethylene, butylene or hexamethylene glycol or of a mixture of these diols, or R₄ is the radical of bisphenol A.

6. A composition according to claim 1, wherein the component D) used is a copolyester composed of recurring structural units of the formulae IIIa and IIIb.

7. A composition according to claim 6, wherein R₆ is a radical of a mononuclear or dinuclear bisphenol or a radical of the formula VIIa or VIIb 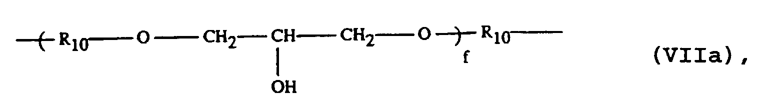 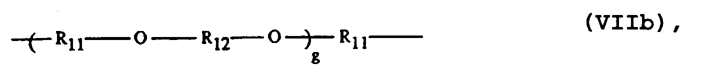 in which R₁₀ and R₁₁ independently of one another are mononuclear or polynuclear radicals of a bisphenol after the functional groups have been removed, R₁₂ is the radical of a dinuclear bisphenol bridged via a -CO- or -SO₂- group, after the functional groups have been removed, the index f is an integer from 1 to 50 and the index g is an integer from 1 to 100.

8. A process for the preparation of a copolyester, copolyamide or copolyester-amide comprising the recurring structural units of the formulae IIIa and IIIb according to claim 1, which comprises reacting compounds of the formula XIV with compounds of the formula XV or compounds of the formula XVI with compounds of the formula XVII 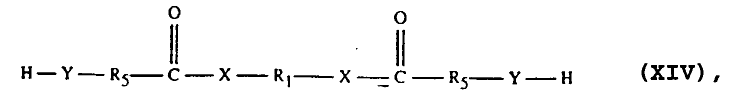 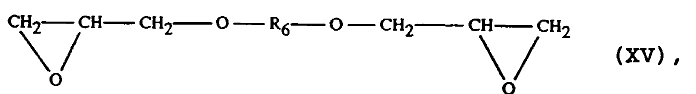 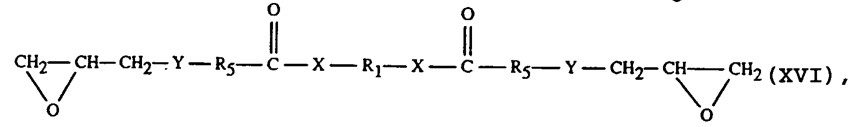
H-O-R₆-O-H (XVII),
in which R₁, R₅, X and Y are as defined in claim 1 and R₆ is a radical of the formula IXa, IXb or IXc 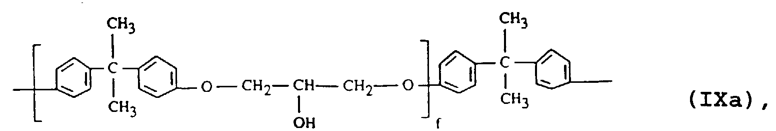 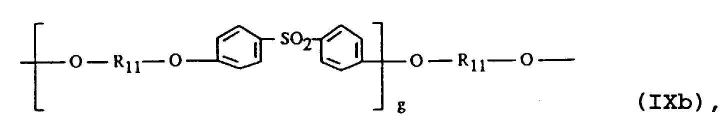 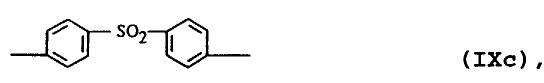 in which the index f is an integer from 3 to 10, the index g is an integer from 1 to 10 and R₁₁ is 1,3-phenylene, 1,4-phenylene or particularly a radical of the formula VIII 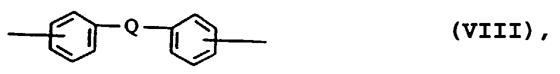 in which Q is a direct C-C bond, -CH₂-, -CH(CH₃)-, -C(CF₃)₂-, -O-, -S- or particularly -C(CH₃)₂- and the free valencies are located in the 4,4'-position relative to the bridge Q.

9. A composition according to claim 6, wherein R₆ is a radical of the formula IXa, IXb or IXc 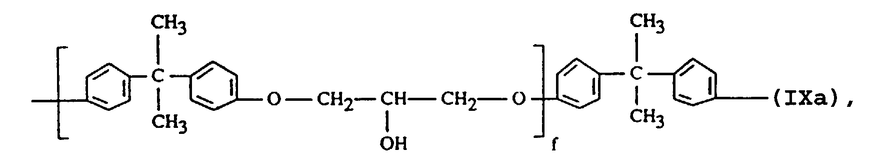 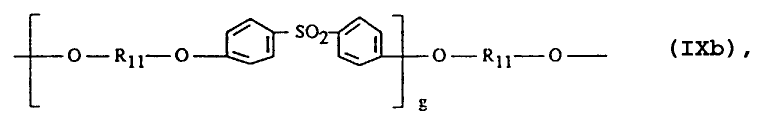 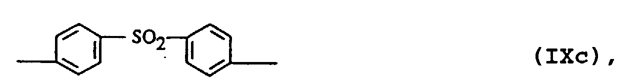 in which the index f is an integer from 3 to 10, the index g is an integer from 1 to 10 and R₁₁ is 1,3-phenylene, 1,4-phenylene or particularly a radical of the formula VIII 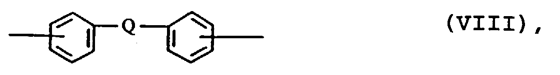 in which Q is a direct C-C bond, -CH₂-, -CH(CH₃)-, -C(CF₃)₂-, -O-, -S- or particularly -C(CH₃)₂- and the free valencies are located in the 4,4'-position relative to the bridge Q.

10. A composition according to claim 1 or a process according to claim 8, wherein X, Y and Z are -O-.

11. The use of a composition according to claim 1 as an adhesive, in particular a hot-melt adhesive, as a matrix resin or as a surface coating material.

12. A method of producing cured products, which comprises heating a composition according to claim 1.

13. A method according to claim 12, wherein a composition according to one of claims 2 to 7, 9 or 10 is used.

## Revendications (Revendications pour l'(les) Etat(s) contractant(s) suivant(s): CH, DE, FR, GB, IT, LI, SE)

1. Compositions contenant :
A) de 40 à 95 % en poids d'une résine époxyde ayant 5 en moyenne plus d'un groupe époxyde par molécule,
B) un durcisseur, activable à haute température, pour le constituant A),
C) un copolymère fluide à des températures inférieures à 80°C, à base de butadiène, d'acrylonitrile et éventuellement d'autres comonomères à insaturation éthylénique, et
D) un copolymère segmenté, contenant des segments mous et des segments durs, ayant les formules la et Ib, ou les formules IIa et IIb, ou les formules IIIa et IIIb, ou une combinaison de segments mous et de segments durs de formule IV : 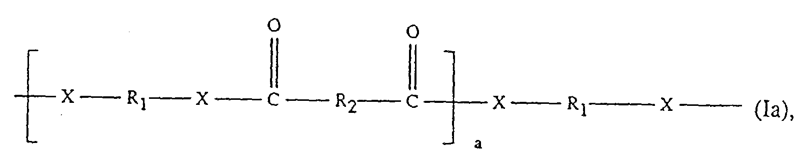 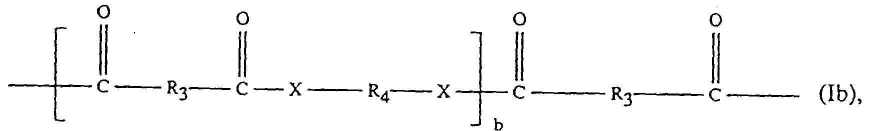 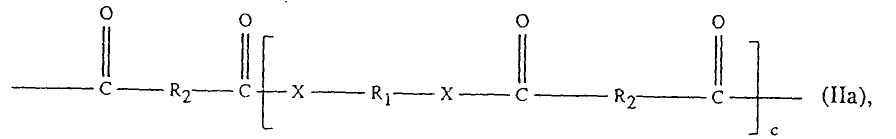 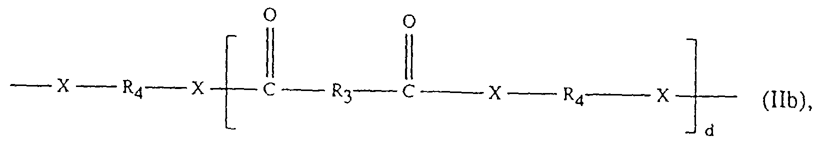 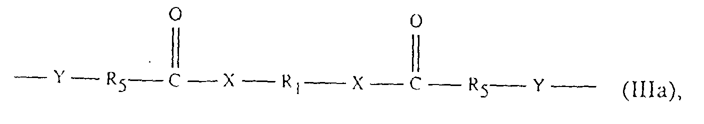 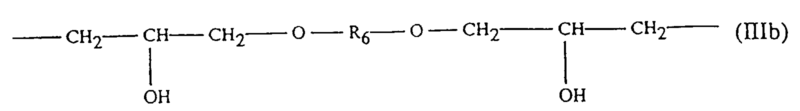 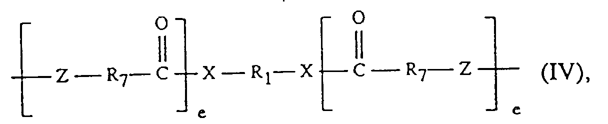 où les segments durs de formules Ib, IIb, IIIb, et les segments durs -[CO-R⁷-Z]- de la formule IV ont une température de ramollissement supérieure à 25°C, R₁ représente le résidu divalent d'un polyalkylèneglycol ayant une masse moléculaire moyenne en nombre comprise entre 500 et 5000, constitué pour l'essentiel de motifs polypropylèneglycol ou polybutylèneglycol après élimination des groupes terminaux hydroxyle ou amino, R₂ et R₃, indépendamment l'un de l'autre, sont chacun le résidu divalent d'un acide dicarboxylique après élimination des groupes carboxyle, R₄ est un résidu divalent d'un diol, d'une diamine ou d'un amino-alcool ayant une masse moléculaire inférieure à 400, après élimination des groupes fonctionnels, R₅ est un résidu divalent d'un acide hydroxycarboxylique aromatique ou d'un acide aminocarboxylique, après élimination des groupes fonctionnels, R₆ est un résidu divalent d'un éther diglycidylique aromatique après élimination des groupes fonctionnels, R₇ est un résidu alkylène ou a l'une des significations données pour R₅, X et Z, indépendamment l'un de l'autre sont -O- ou -NH-, Y est -O- ou -NR₈-, R₈ est un radical alkyle, les indices a et c, indépendamment l'un de l'autre, sont chacun un nombre entier de 0 à 100, les indices b et d, indépendamment l'un de l'autre, sont chacun un nombre entier de 1 à 100, et l'indice e est un nombre entier de 1 à 50, où le constituant A, dans le cas où D est un copolymère segmenté contenant des segments mous et des segments durs ayant les formules IIIa et IIIb, est un éther diglycidylique solide à base de bisphénol ou une combinaison solide de ces résines et d'éthers diglycidyliques liquides à base de bisphénol A, étant entendu qu'il est exclu que e soit égal à 1 quand R est un résidu divalent d'un acide hydroxycarboxylique aromati-que ou d'un acide aminocarboxylique après élimination des groupes fonctionnels.

2. Compositions selon la revendication 1 caractérisées en ce que le constituant A) est un éther glycidylique, en particulier un éther diglycidylique à base de bisphénol, ou encore une novolaque glycidylisée, en par-ticulier une novolaque glycidylisée à base de phénol-formaldéhyde ou à base de crésol-formaldéhyde.

3. Compositions selon la revendication 1, caractérisées en ce que le constituant B) est une amidine, en particulier le dicyanodiamide.

4. Compositions selon la revendication 1, caractérisées en ce que la masse moléculaire moyenne en nombre du constituant C) est de 1000 à 5000, et que la teneur en acrylonitrile est de 8 à 30 % en poids, par rapport à la quantité totale des monomères.

5. Compositions selon la revendication 1, caractérisées en ce qu'on utilise comme constituant D) un copolyester constitué de motifs structuraux répétitifs de formules la et Ib ou IIa et IIb, où R₁ dérive d'un polypropylèneglycol ou en particulier d'un polybutylèneglycol, R₂ et R₃ dérivent de l'acide téréphtalique, de l'acide isophtalique ou d'un mélange de ces acides, et R₄ est le résidu d'un éthylène-, butylène- ou hexaméthylèneglycol, ou encore d'un mélange de ces diols, ou encore où R₄ est le résidu du bisphénol A.

6. Compositions selon la revendication 1, caractérisées en ce qu'on utilise comme constituant D) un copolyester constitué de motifs structuraux répétitifs de formules IIIa et IIIb.

7. Compositions selon la revendication 6, caractérisées en ce que R₆ est un résidu d'un bisphénol mono- ou bicyclique, ou un résidu de formule VIIa ou VIIb : 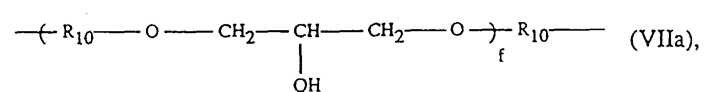 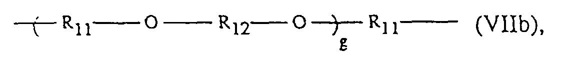 où R₁₀ et R₁₁, indépendamment l'un de l'autre, représentent chacun un radical mono- ou polycyclique d'un bisphénol après élimination des groupes fonctionnels, R₁₂ est le résidu d'un bisphénol bicyclique, ponté par l'intermédiaire d'un groupe -CO- ou -SO₂-, après élimination des groupes fonctionnels, l'indice f est un nom-bre entier de 1 à 50, et l'indice g est un nombre entier de 1 à 100.

8. Copolyesters, copolyamides et copolyesteramides contenant les motifs structuraux répétitifs de formules IIIa et IIIb selon la revendication 1, où R₆ est un résidu de formule IXa, IXb ou IXc : 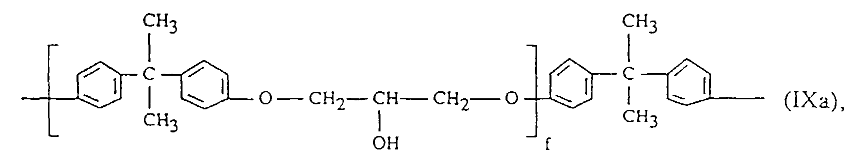 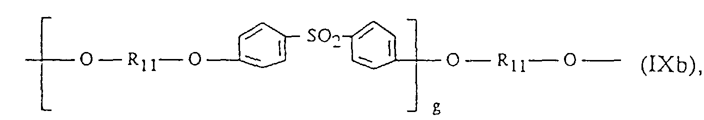 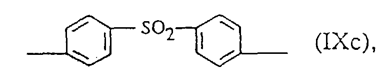 où l'indice f est un nombre entier de 3 à 10, l'indice g est un nombre entier de 1 à 10, et R₁₁ est le 1,3-phénylène, le 1,4-phénylène ou en particulier un résidu de formule VIII : 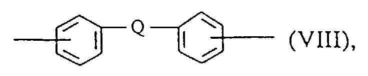 où Q est une liaison directe C-C, -CH₂-, -CH(CH₃)-, -C(CF₃)₂-, -O-, -S- ou en particulier -C(CH₃)₂-, et où les valences libres se trouvent sur les positions 4,4' par rapport au pont Q.

9. Compositions selon la revendication 6, caractérisées en ce que R₆ est un résidu de formule IXa, IXb ou IXc : 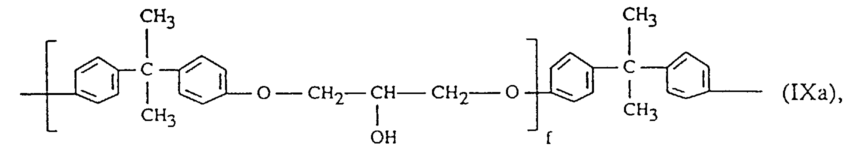 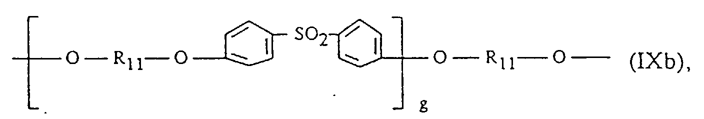 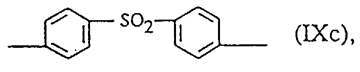 où l'indice f est un nombre entier de 3 à 10, l'indice g est un nombre entier de 1 à 10, et R₁₁ est le 1,3-phénylène, le 1,4-phénylène ou en particulier un résidu de formule VIII : 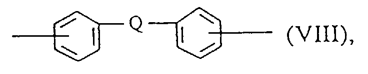 où Q est une liaison directe C-C, -CH₂-, -CH(CH₃)-, -C(CF₃)₂-, -O-, -S- ou en particulier -C(CH₃)₂-, et où les valences libres se trouvent sur les positions 4,4' par rapport au pont Q.

10. Compositions selon la revendication 1, ou copolymères selon la revendication 8, caractérisés en ce que X, Y et Z sont -O-.

11. Utilisation des compositions selon la revendication 1 comme adhésifs, en particulier comme adhésifs fusibles, comme résines de matrice ou comme produits de revêtement de surfaces.

12. Produits durcis pouvant être obtenus par chauffage des compositions selon la revendication 1.

## Revendications (Revendications pour l'(les) Etat(s) contractant(s) suivant(s): ES)

1. Compositions contenant :
A) de 40 à 95 % en poids d'une résine époxyde ayant en moyenne plus d'un groupe époxyde par molécule,
B) un durcisseur, activable à haute température, pour le constituant A),
C) un copolymère fluide à des températures inférieures à 80°C, à base de butadiène, d'acrylonitrile et éventuellement d'autres comonomères à insaturation éthylénique, et
D) un copolymère segmenté, contenant des segments mous et des segments durs, ayant les formules la et Ib, ou les formules 2a et 2b, ou les formules 3a et 3b, ou une combinaison de segments mous et de segments durs de formule IV : 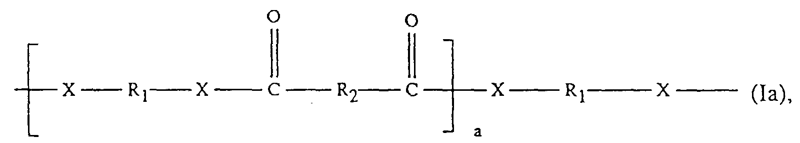 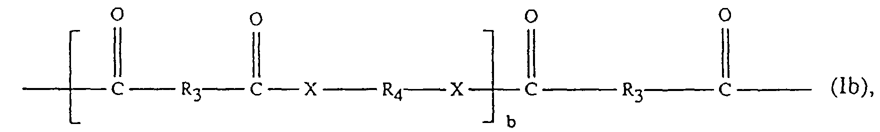 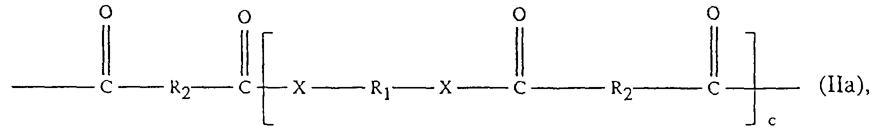 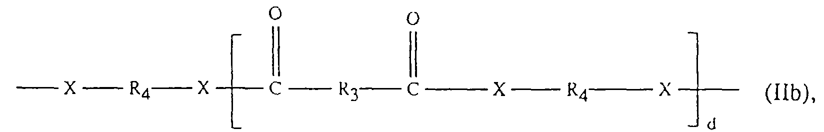 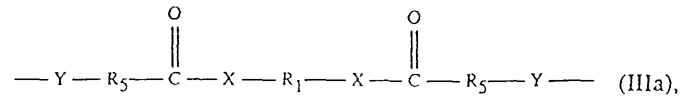 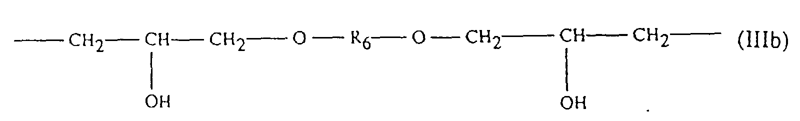 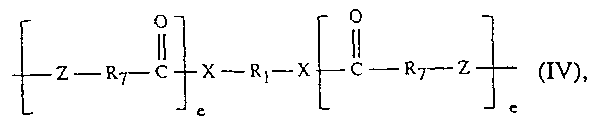 où les segments durs de formules Ib, IIb, IIIb, et les segments durs -[CO-R⁷-Z]- de la formule IV ont une température de ramollissement supérieure à 25°C, R₁ représente le résidu divalent d'un polyalkylèneglycol ayant une masse moléculaire moyenne en nombre comprise entre 500 et 5000, constitué pour l'essentiel de motifs polypropylèneglycol ou polybutylèneglycol après élimination des groupes terminaux hydroxyle ou amino, R₂ et R₃, indépendamment l'un de l'autre, sont chacun le résidu divalent d'un acide dicarboxylique après élimination des groupes carboxyle, R₄ est un résidu divalent d'un diol, d'une diamine ou d'un amino-alcool ayant une masse moléculaire inférieure à 400, après élimination des groupes fonctionnels, R₅ est un résidu divalent d'un acide hydroxycarboxylique aromatique ou d'un acide aminocarboxylique, après élimination des groupes fonctionnels, R₆ est un résidu divalent d'un éther diglycidylique aromatique après élimination des groupes fonctionnels, R₇ est un résidu alkylène ou a l'une des significations données pour R₅, X et Z, indépendamment l'un de l'autre sont -O- ou -NH-, Y est -O- ou -NR₈-, R₈ est un radical alkyle, les indices a et c, indépendamment l'un de l'autre, sont chacun un nombre entier de 0 à 100, les indices b et d, indépendamment l'un de l'autre, sont chacun un nombre entier de 1 à 100, et l'indice e est un nombre entier de 1 à 50, où le constituant A), dans le cas où D) est un copolymère segmenté contenant des segments mous et des segments durs ayant les formules IIIa et IIIb, est un éther diglycidylique solide à base de bisphénol ou une combinaison solide de ces résines et d'éthers diglycidyliques liquides à base de bisphénol A, étant entendu qu'il est exclu que e soit égal à 1 quand R est un résidu divalent d'un acide hydroxycarboxylique aromati-que ou d'un acide aminocarboxylique après élimination des groupes fonctionnels.

2. Compositions selon la revendication 1 caractérisées en ce que le constituant A) est un éther glycidylique, en particulier un éther diglycidylique à base de bisphénol, ou encore une novolaque glycidylisée, en par-ticulier une novolaque glycidylisée à base de phénol-formaldéhyde ou à base de crésol-formaldéhyde.

3. Compositions selon la revendication 1, caractérisées en ce que le constituant B) est une amidine, en particulier le dicyanodiamide.

4. Compositions selon la revendication 1, caractérisées en ce que la masse moléculaire moyenne en nombre du constituant C) est de 1000 à 5000, et que la teneur en acrylonitrile est de 8 à 30 % en poids, par rapport à la quantité totale des monomères.

5. Compositions selon la revendication 1, caractérisées en ce qu'on utilise comme constituant D) un copolyester constitué de motifs structuraux répétitifs de formules la et Ib ou IIa et IIb, où R₁ dérive d'un polypropylèneglycol ou en particulier d'un polybutylèneglycol, R₂ et R₃ dérivent de l'acide téréphtalique, de l'acide isophtalique ou d'un mélange de ces acides, et R₄ est le résidu d'un éthylène-, butylène- ou hexaméthylèneglycol, ou encore d'un mélange de ces diols, ou encore où R₄ est le résidu du bisphénol A.

6. Compositions selon la revendication 1, caractérisées en ce qu'on utilise comme constituant D) un copolyester constitué de motifs structuraux répétitifs de formules IIIa et IIIb.

7. Compositions selon la revendication 6, caractérisées en ce que R₆ est un résidu d'un bisphénol mono- ou bicyclique, ou un résidu de formule VIIa ou VIIb : 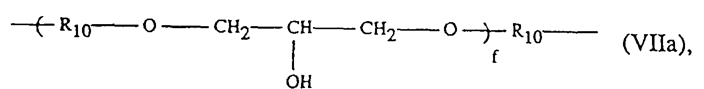 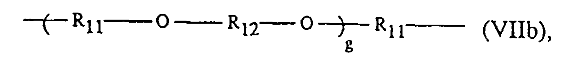 où R₁₀ et R₁₁, indépendamment l'un de l'autre, représentent chacun un radical mono- ou polycyclique d'un bisphénol après élimination des groupes fonctionnels, R₁₂ est le résidu d'un bisphénol bicyclique, ponté par l'intermédiaire d'un groupe -CO- ou -SO₂-, après élimination des groupes fonctionnels, l'indice f est un nom-bre entier de 1 à 50, et l'indice g est un nombre entier de 1 à 100.

8. Procédé pour préparer des copolyesters, des copolyamides et des copolyesteramides contenant les éléments structuraux répétitifs de formules IIIa et IIIb selon la revendication 1, caractérisé en ce qu'on fait réagir des composés de formule XIV avec des composés de formule XV ou des composés de formule XVI avec des composés de formule XVII : 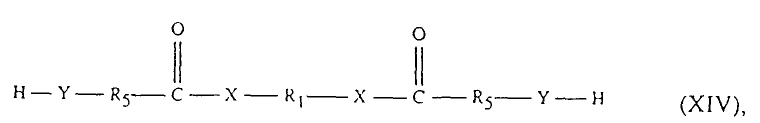 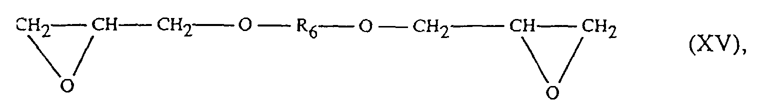 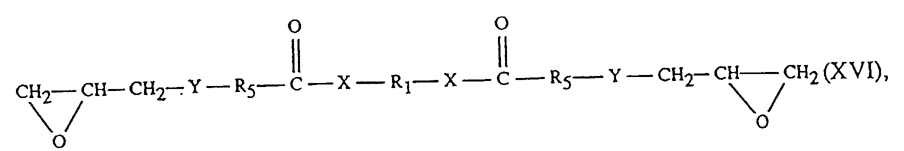
H-O-R₆-O-H (XVII)
où R₁, R₅, X et Y ont les significations données dans la revendication 1, et R₆ est un résidu de formule IXa, IXb ou IXc : 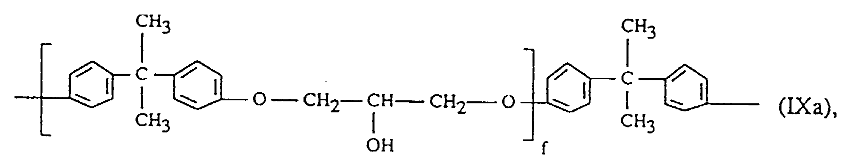 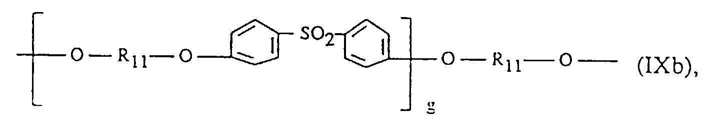 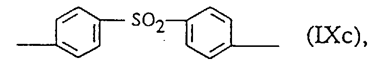 où l'indice f est un nombre entier de 3 à 10, l'indice g est un nombre entier de 1 à 10, et R₁₁ est le 1,3-phénylène, le 1,4-phénylène ou en particulier un résidu de formule VIII : 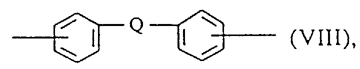 où Q est une liaison directe C-C, -CH₂-, -CH(CH₃)-, -C(CF₃)₂-, -O-, -S- ou en particulier -C(CH₃)₂-, et où les valences libres se trouvent sur les positions 4,4' par rapport au pont Q.

9. Compositions selon la revendication 6, caractérisées en ce que R₆ est un résidu de formule IXa, IXb ou IXC : 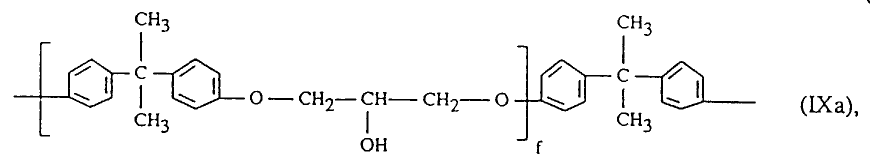 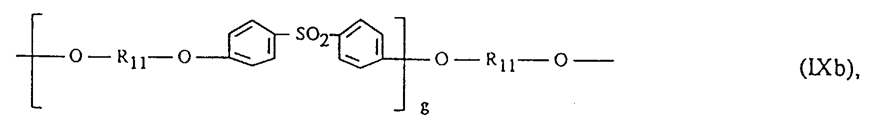 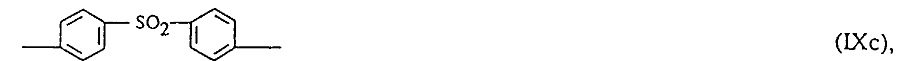 où l'indice f est un nombre entier de 3 à 10, l'indice g est un nombre entier de 1 à 10, et R₁₁ est le 1,3-phénylène, le 1,4-phénylène ou en particulier un résidu de formule VIII : 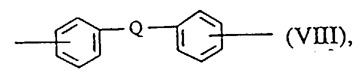 où Q est une liaison directe C-C, -CH₂-, -CH(CH₃)-, -C(CF₃)₂-, -O-, -S- ou en particulier -C(CH₃)₂-, et où les valences libres se trouvent sur les positions 4,4' par rapport au pont Q.

10. Compositions selon la revendication 1 ou procédé selon la revendication 8, caractérisés en ce que X, Y et Z sont -O-.

11. Utilisation des compositions selon la revendication 1 comme adhésifs, en particulier comme adhésifs fusibles, comme résines de matrice ou comme produits de revêtement de surfaces.

12. Procédé de préparation de produits durcis caractérisé en ce qu'on chauffe des compositions selon la revendication 1.

13. Procédé selon la revendication 12, caractérisé en ce qu'on utilise une composition selon l'une des revendications 2 à 7, 9 ou 10.
